(19) Europäisches Patentamt
European Patent Office
Office européen des brevets

(11) **EP 4 518 212 A1**

(12) **EUROPEAN PATENT APPLICATION**
published in accordance with Art. 153(4) EPC

(43) Date of publication:
**05.03.2025 Bulletin 2025/10**

(21) Application number: **23795626.3**

(22) Date of filing: **28.04.2023**

(51) International Patent Classification (IPC):
**H04L 1/18** (2023.01)    **H04W 72/12** (2023.01)

(52) Cooperative Patent Classification (CPC):
**H04L 1/18; H04W 72/12**

(86) International application number:
**PCT/CN2023/091591**

(87) International publication number:
**WO 2023/208194 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.04.2022   CN 202210476511**
**17.11.2022   CN 202211439954**

(71) Applicant: **Datang Mobile Communications Equipment Co., Ltd.**
**Beijing 100085 (CN)**

(72) Inventor: **WANG, Junwei**
**Beijing 100085 (CN)**

(74) Representative: **Studio Torta S.p.A.**
**Via Viotti, 9**
**10121 Torino (IT)**

(54) **HYBRID AUTOMATIC REPEAT REQUEST FEEDBACK METHOD AND APPARATUS**

(57)    A HARQ feedback method and device are provided, which relates to the field of communications technology. The method is performed by a terminal and includes: receiving downlink control information (DCI), the DCI scheduling PDSCHs of multiple cells, the DCI indicating a number of slots between a latest PDSCH in the scheduled PDSCHs of the cells and a PUCCH; determining a first set, the first set comprising a first spacing, the first spacing being used to indicate a number of slots between the PDSCH and the PUCCH; processing the first set according to the second spacing to obtain the second set, the second spacing being used to indicate a number of slots between the DCI and the PDSCH; determining, according to the second set, a reception occasion of the PDSCH that is scheduled by the DCI and corresponds to a static HARQ codebook of each cell.

EP 4 518 212 A1

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH) — 101

↓

determining a first set; where the first set includes a first spacing, the first spacing is used to indicate a number of slots between the PDSCH and the PUCCH — 102

↓

processing the first set according to a second spacing to obtain a second set; wherein the second spacing is used to indicate a number of slots between the DCI and the PDSCH — 103

↓

determining, according to the second set, a reception occasion of the PDSCH that is scheduled by the DCI and corresponds to a static HARQ codebook of each of the cells — 104

**FIG. 1**

**Description**

**CROSS-REFERENCE TO RELATED APPLICATION**

The present application claims priority to Chinese Patent Application No. 202210476511.5 filed in China on April 29, 2022 and priority to Chinese Patent Application No. 202211439954.3 filed in China on November 17, 2022, the entire contents of which are incorporated herein by reference.

**TECHNICAL FIELD**

The present application relates to the field of communications technology, and in particular to a hybrid automatic repeat request (HARQ) feedback method and device.

**BACKGROUND**

At present, with the development of communications technology, a solution of scheduling physical downlink shared channels (PDSCHs) of multiple cells using downlink control information (DCI) is proposed, to reduce signaling overhead.

However, the HARQ feedback in the related art is dedicated for one DCI to schedule a PDSCH on one cell. Thus, when one DCI schedules PDSCHs on multiple cells, how to implement the HARQ feedback has become an urgent problem to be solved.

**SUMMARY**

An object of the present application is to provide a HARQ feedback method and device, so as to implement HARQ feedback when one DCI schedules PDSCHs on multiple cells.

In order to achieve the above object, an embodiment of the present application provides a HARQ feedback method, which is performed by a terminal and includes:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

determining a first set; where the first set includes a first spacing, and the first spacing is used to indicate the number of slots between the PDSCH and the PUCCH;

processing the first set according to a second spacing to obtain a second set; where the second spacing is used to indicate the number of slots between the DCI and the PDSCH;

determining, according to a second set, a reception occasion of the PDSCH that is scheduled by the DCI and corresponds to a static HARQ codebook of each of the cells.

The embodiment of the present application further provides a HARQ feedback method, which is performed by a terminal and includes:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

determining, according to a second set, a reception occasion of the PDSCH that is scheduled by the DCI and corresponds to a static HARQ codebook of each of the cells;

where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

Optionally, the second set is obtained according to the first set and the second spacing, including:

obtaining the respective second spacing corresponding to each of the cells in a time domain resource allocation (TDRA) table;

performing the following for each first cell of the cells:

determining, according to the obtained second spacing, an adjustment parameter corresponding to each row index of the first cell in the TDRA table;

performing following spacing processing operations based on each of the row indexes of different rows of the first cell in the TDRA table:

determining, according to an adjustment parameter of an $(i+1)^{th}$ row index, an adjusted first set corresponding to the $(i+1)^{th}$ row index, where i is an integer greater than or equal to 1;

determining an $(i+1)^{th}$ spacing processing result of the $(i+1)^{th}$ row index according to the adjusted first set and a determined $i^{th}$ spacing processing result of the $i^{th}$ row index, and then proceeding to perform a spacing processing operation corresponding to an $(i+2)^{th}$ row index;

after obtaining a spacing processing result corresponding to a last row index of the first cell in the TDRA table, determining the obtained spacing processing result corresponding to the last row index as the second set of the first cell.

Optionally, the determining the $i^{th}$ spacing processing result of the $i^{th}$ row index includes:

when i=1, determining an adjusted first set corresponding to a first row index according to an adjustment parameter of the first row index corresponding to the first cell;

obtaining a first spacing processing result of the first row index according to the adjusted first set of the first row index, or obtaining a first spacing processing result of the first row index according to the first set and the adjusted first set corresponding to the first row index.

Optionally, the determining, according to the obtained second spacing, the adjustment parameter corresponding to each row index of the first cell in the TDRA table includes:

for one of the row indexes of the first cell in the TDRA table, determining an adjustment parameter of the row index in the first cell based on a second spacing corresponding to the row index in the first cell and a maximum second spacing corresponding to the row index in the cells.

Optionally, the determining the adjustment parameter of the row index in the first cell based on the second spacing corresponding to the row index in the first cell and the maximum second spacing corresponding to the row index in the cells includes:

calculating an adjustment parameter $\Delta K_{0,r,c}$ of the first cell corresponding to a row index r through a formula $\Delta K_{0,r,c} = max(K_{0,r,1}, \ldots , K_{0,r,n}, \ldots , K_{0,r,n}) - K_{0,r,c}$;

where $K_{0,r,n}$ represents a second spacing corresponding to the row index r of a cell n in the cells, N represents a number of the cells, and $K_{0,r,c}$ represents the second spacing corresponding to the row index r in the first cell c.

Optionally, the determining the adjusted first set corresponding to the $(i+1)^{th}$ row index according to the adjustment parameter of the $(i+1)^{th}$ row index includes:

for each element in the first set, the element and the adjustment parameter of the $(i+1)^{th}$ row index are added, to obtain the adjusted first set of the $(i+1)^{th}$ row index.

Optionally, the determining the $(i+1)^{th}$ spacing processing result of the $(i+1)^{th}$ row index according to the adjusted first set and the determined $i^{th}$ spacing processing result of the $i^{th}$ row index includes:

joining the adjusted first set and the $i^{th}$ spacing processing result corresponding to the $i^{th}$ row index of the first cell to obtain a union result, and taking the union result as the $(i+1)^{th}$ spacing processing result corresponding to the $(i+1)^{th}$ row index of the first cell.

Optionally, the method further includes:

determining, according to the TDRA table and the second set of the first cell, a valid start and length indicator value (SLIV) corresponding to each first spacing in the second set.

Optionally, the determining, according to the TDRA table and the second set of the first cell, the valid start and length indicator value (SLIV) corresponding to each first spacing in the second set includes:

deleting, based on the TDRA table and the second set of the first cell, a redundant SLIV in all SLIVs corresponding to the first spacing; or

selecting as the valid SLIV, based on the TDRA table and the second set of the first cell, a SLIV corresponding to a time when feeding back HARQ-ACK information on the PUCCH indicated by the first spacing.

Optionally, the obtaining the respective second spacing corresponding to each of the cells in the time domain resource allocation (TDRA) table includes:

for each of the cells,

obtaining a second spacing corresponding to the first cell and a number of repeated transmissions of the first cell in the TDRA table;

updating, according to the number of repeated transmissions, the second spacing corresponding to the first cell.

Optionally, the updating, according to the number of repeated transmissions, the second spacing corresponding to the first cell includes:

calculating an updated second spacing $K'_0$ through a formula $K'_0 = K_0 + \text{repetitionNum} - 1$;

where $K_0$ represents the second spacing before updating, and repetitionNum represents the number of repeated transmissions.

Optionally, after determining, according to the second set, the reception occasion of the PDSCH that corresponds to the static hybrid automatic repeat request (HARQ) codebook of each of the cells, the method further includes: in case that HARQ-ACK feedback bundling is configured, determining HARQ-ACK information according to a PDSCH corresponding to a latest reception occasion of the PDSCH among the multiple cells.

In order to achieve the above object, an embodiment of the present application further provides a HARQ feedback method, which is performed by a terminal and includes:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

determining, according to a second spacing, a reception occasion of the PDSCH that is scheduled by the DCI and corresponds to a static HARQ codebook of each of the cells, where the second spacing is used to indicate a number of slots between the DCI and the PDSCH.

Optionally, the second spacing is recorded in a time domain resource allocation (TDRA) table, and the second spacings that correspond to the cells and are under each row index of the TDRA table are same.

Optionally, the second spacing is a specific second spacing recorded in the TDRA table, or a second spacing of a specific cell.

In order to achieve the above object, an embodiment of the present application further provides a HARQ feedback method, which is performed by a network device, including:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

determining a first set; where the first set includes a first spacing, and the first spacing is used to indicate the number of slots between the PDSCH and the PUCCH;

processing the first set according to a second spacing to obtain a second set; where the second spacing is used to indicate the number of slots between the DCI and the PDSCH.

determining, according to a second set, a reception occasion of the PDSCH of the terminal that is scheduled by the DCI and corresponds to a static HARQ codebook of each of the cells.

An embodiment of the present application further provides a HARQ feedback method, which is performed by a terminal, and the method includes:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

determining, according to a second set configured by a network device, a reception occasion of the PDSCH that is scheduled by the DCI and corresponds to a static HARQ codebook of each of the cells.

In an embodiment of the present application, the second set is directly configured by the network device according to a protocol; or the second set is configured by the network device through high-layer signaling.

In an embodiment of the present application, the second set being configured by the network device through the high-layer signaling includes:

when the cell is not configured with single-cell scheduling signaling or an activated part bandwidth (BWP) of the cell is in a sleep state, the second set configured through the high-layer signaling includes at least one of the following:

a first K1 value set that is of the cells and configured through the high-layer signaling, where the K1 represents the number of slots between the PDSCH and the PUCCH;

a first set that is used for multi-cell scheduling and configured through the high-layer signaling, where the first set includes a first spacing, and the first spacing is used to indicate the number of slots between the PDSCH and the PUCCH;

a second K1 value set, where the second K1 value set is determined according to values of subcarrier spacings of a PUCCH used to carry HARQ-ACK information, and the values of the subcarrier spacings are different, and K1 values included in the second K1 value set are same or different;

a first set corresponding to a DCI format 1-1 configured by the network device;

a first set corresponding to a DCI format 1-2 configured by the network device; or

a union set obtained by joining a first set corresponding to a DCI format 1-1 configured by the network device and a first set corresponding to a DCI format 1-2 configured by the network device.

In an embodiment of the present application, the second set is configured by the network device through high-layer signaling, including:

when the cell is configured with single-cell scheduling signaling and the single-cell scheduling signaling is of a fallback format, the second set configured through the high-layer signaling includes at least one of the following:

a first K1 value set that is of the cells and configured through the high-layer signaling, where the K1 represents the number of slots between the PDSCH and the PUCCH;

a second K1 value set, where the second K1 value set is determined according to values of subcarrier spacings of a PUCCH used to carry HARQ-ACK information, and the values of the subcarrier spacings are different, and K1 values included in the second K1 value set are same or different; or

a set obtained by joining the first K1 value set and the second K1 value set.

In an embodiment of the present application, the second set is configured by the network device through high-layer signaling, including:

when the cell is configured with single-cell scheduling signaling, the single-cell scheduling signaling is of a DCI format 1-1, and the cell is not configured with scheduling signaling of a DCI format 1-2, the second set configured through the high-layer signaling includes at least one of the following:

a first K1 value set that is of the cells and configured through the high-layer signaling, where the K1 represents the number of slots between the PDSCH and the PUCCH;

a first set corresponding to the DCI format 1-1 configured by the network device; or

a set obtained by joining the first K1 value set and a first set corresponding to the DCI format 1-1 configured by the network device.

In an embodiment of the present application, the second set is configured by the network device through high-layer signaling, including:

when the cell is configured with single-cell scheduling signaling, the single-cell scheduling signaling is of a DCI format 1-2, and the cell is not configured with scheduling signaling of a DCI format 1-1, the second set configured through the high-layer signaling includes at least one of the following:

a first K1 value set that is of the cells and configured through the high-layer signaling, where the K1 represents the number of slots between the PDSCH and the PUCCH;

a first set corresponding to the DCI format 1-2 configured by the network device; or

a set obtained by joining the first K1 value set and a first set corresponding to the DCI format 1-2 configured by the network device.

In an embodiment of the present application, the second set is configured by the network device through high-layer signaling, including:

when the cell is configured with single-cell scheduling signaling, and the single-cell scheduling signaling is of a DCI format 1-2 and a DCI format 1-1, the second set configured through the high-layer signaling includes at least one of the following:

a union set obtained by joining a first set corresponding to the DCI format 1-1 configured by the network device and a first set corresponding to the DCI format 1-2 configured by the network device;

a first K1 value set that is of the cells and configured through the high-layer signaling, where the K1 represents the number of slots between the PDSCH and the PUCCH; or

a set obtained by joining the union set and the first K1 value set.

An embodiment of the present application further provides a HARQ feedback method, which is performed by a network device, including:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
determining, according to the second set, a reception occasion of the PDSCH of the terminal, where the PDSCH of the terminal is scheduled by the DCI and corresponds to a static HARQ codebook of each of the cells;
where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

Optionally, the second set being obtained according to the first set and the second spacing includes:

obtaining the respective second spacing corresponding to each of the cells in a time domain resource allocation (TDRA) table;
for each first cell of the multiple cells,
determining, according to the obtained second spacing, an adjustment parameter corresponding to each row index of the first cell in the TDRA table;
performing following spacing processing operations based on each of the row indexes of different rows of the first cell in the TDRA table:
determining, according to an adjustment parameter of an $(i+1)^{th}$ row index, an adjusted first set corresponding to the $(i+1)^{th}$ row index, where i is an integer greater than or equal to 1;
determining an $(i+1)^{th}$ spacing processing result of the $(i+1)^{th}$ row index according to the adjusted first set and a determined $i^{th}$ spacing processing result of the $i^{th}$ row index, and then proceeding to perform a spacing processing operation corresponding to an $(i+2)^{th}$ row index;
after obtaining a spacing processing result corresponding to a last row index of the first cell in the TDRA table, determining the obtained spacing processing result corresponding to the last row index as the second set of the first cell.

Optionally, the determining the $i^{th}$ spacing processing result of the $i^{th}$ row index includes:

when i=1, determining an adjusted first set corresponding to a first row index according to an adjustment parameter of the first row index corresponding to the first cell;
obtaining a first spacing processing result of the first row index according to the adjusted first set of the first row index, or obtaining a first spacing processing result of the first row index according to the first set and the adjusted first set corresponding to the first row index.

Optionally, the determining, according to the obtained second spacing, the adjustment parameter corresponding to each row index of the first cell in the TDRA table includes:
for one of the row indexes of the first cell in the TDRA table, determining an adjustment parameter of the row index in the first cell based on a second spacing corresponding to the row index in the first cell and a maximum second spacing corresponding to the row index in the cells.
Optionally, the method further includes:
determining, according to the TDRA table and the second set of the first cell, a valid start and length indicator value (SLIV) corresponding to each first spacing in the second set.
Optionally, the determining, according to the TDRA table and the second set of the first cell, the valid start and length indicator value (SLIV) corresponding to each first spacing in the second set includes:

deleting, based on the TDRA table and the second set of the first cell, a redundant SLIV in all SLIVs corresponding to the first spacing; or
selecting as the valid SLIV, based on the TDRA table and the second set of the first cell, a SLIV corresponding to a time when feeding back HARQ-ACK information on the PUCCH indicated by the first spacing.

Optionally, the obtaining the respective second spacing corresponding to each of the cells in the time domain resource allocation (TDRA) table includes:

for each of the cells,

obtaining a second spacing corresponding to the first cell and a number of repeated transmissions of the first cell in the TDRA table;

updating, according to the number of repeated transmissions, the second spacing corresponding to the first cell.

Optionally, after determining, according to the second set, the reception occasion of the PDSCH of the terminal, the method further includes:

in case that HARQ-ACK feedback bundling is configured, determining HARQ-ACK information according to a PDSCH corresponding to a latest reception occasion of the PDSCH among the multiple cells.

In order to achieve the above object, an embodiment of the present application further provides a HARQ feedback method, which is performed by a network device, including:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

determining, according to a second spacing, a reception occasion of the PDSCH of the terminal, where the PDSCH of the terminal is scheduled by the DCI and corresponds to a static HARQ codebook of each of the cells, and the second spacing is used to indicate a number of slots between the DCI and the PDSCH.

An embodiment of the present application further provides a HARQ feedback method, which is performed by a network device, including:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

determining, according to a second spacing, a reception occasion of the PDSCH of the terminal, where the PDSCH of the terminal is scheduled by the DCI and corresponds to a static HARQ codebook of each of the cells, and the second spacing is used to indicate a number of slots between the DCI and the PDSCH.

Optionally, the second spacing is recorded in a time domain resource allocation (TDRA) table, and the second spacings that correspond to the cells and are under each row index of the TDRA table are same.

Optionally, the second spacing is a specific second spacing recorded in the TDRA table, or a second spacing of a specific cell.

In order to achieve the above-mentioned object, an embodiment of the present application further provides a HARQ feedback device, including: a memory, a transceiver, and a processor;

the memory is configured for storing program instructions; the transceiver is configured for sending and receiving data under the control of the processor; and the processor is configured for reading the program instructions in the memory; the transceiver is configured to perform the following operations:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

the processor is configured to perform the following operations:

determining, according to a second set, a reception occasion of the PDSCH that is scheduled by the DCI and corresponds to a static HARQ codebook of each of the cells;

where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

In order to achieve the above-mentioned object, an embodiment of the present application further provides a HARQ feedback device, including: a memory, a transceiver, and a processor;

the memory is configured for storing program instructions; the transceiver is configured for sending and receiving data under the control of the processor; and the processor is configured for reading the program instructions in the memory; the transceiver is configured to perform the following operations:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

the processor is configured to perform the following operations:

determining, according to a second spacing, a reception occasion of the PDSCH that is scheduled by the DCI and corresponds to a static HARQ codebook of each of the cells, where the second spacing is used to indicate a number of slots between the DCI and the PDSCH.

In order to achieve the above-mentioned object, an embodiment of the present application further provides a HARQ feedback device, including: a memory, a transceiver, and a processor;

the memory is configured for storing program instructions; the transceiver is configured for sending and receiving data under the control of the processor; and the processor is configured for reading the program instructions in the memory; the transceiver is configured to perform the following operations:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

the processor is configured to perform the following operations:

determining, according to the second set, a reception occasion of the PDSCH of the terminal, where the PDSCH of the terminal is scheduled by the DCI and corresponds to a static HARQ codebook of each of the cells;

where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

In order to achieve the above-mentioned object, an embodiment of the present application further provides a HARQ feedback device, including: a memory, a transceiver, and a processor;

the memory is configured for storing program instructions; the transceiver is configured for sending and receiving data under the control of the processor; and the processor is configured for reading the program instructions in the memory; the transceiver is configured to perform the following operations:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

the processor is configured to perform the following operations:

determining, according to a second spacing, a reception occasion of the PDSCH of the terminal, where the PDSCH of the terminal is scheduled by the DCI and corresponds to a static HARQ codebook of each of the cells, and the second spacing is used to indicate a number of slots between the DCI and the PDSCH.

In order to achieve the above object, an embodiment of the present application further provides a HARQ feedback device, including:

a first receiving module, configured to receive downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

a first processing module, configured to determine, according to a second set, a reception occasion of the PDSCH that is scheduled by the DCI and corresponds to a static HARQ codebook of each of the cells;

where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

In order to achieve the above object, an embodiment of the present application further provides a HARQ feedback device, including:

a second receiving module, configured to receive downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

a second processing module, configured to determine, according to a second spacing, a reception occasion of the PDSCH that is scheduled by the DCI and corresponds to a static HARQ codebook of each of the cells, where the second spacing is used to indicate a number of slots between the DCI and the PDSCH.

In order to achieve the above object, an embodiment of the present application further provides a HARQ feedback device, including:

a first sending module, configured to send downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

a third processing module, configured to determine, according to the second set, a reception occasion of the PDSCH of the terminal, where the PDSCH of the terminal is scheduled by the DCI and corresponds to a static HARQ codebook of each of the cells;

where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

In order to achieve the above object, an embodiment of the present application further provides a HARQ feedback device, including:

a second sending module, configured to send downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

a fourth processing module, configured to determine, according to a second spacing, a reception occasion of the PDSCH of the terminal, where the PDSCH of the terminal is scheduled by the DCI and corresponds to a static HARQ codebook of each of the cells, and the second spacing is used to indicate a number of slots between the DCI and the PDSCH.

In order to achieve the above object, an embodiment of the present application also provides a processor-readable storage medium, which stores program instructions, and the program instructions are used to cause the processor to execute the HARQ feedback method performed by the above-mentioned terminal or network device.

The above technical solution of the present application has at least the following beneficial effects:

in the above technical solutions of the embodiments of the present application, after receiving the DCI and determining the first set, the terminal can, with respect to the case where the DCI schedules the PDSCHs of multiple cells, expand the first set using the second spacing to obtain the second set, and then use the second set to determine the reception occasion of the PDSCH that corresponds to the static HARQ codebook of each cell and scheduled by the DCI, thereby realizing the HARQ feedback in the case where one DCI schedules the PDSCHs on the multiple cells.

## BRIEF DESCRIPTION OF THE DRAWINGS

FIG. 1 is a first flow chart of a HARQ feedback method according to an embodiment of the present application;
FIG. 2 is a first schematic diagram of possible scheduling;
FIG. 3 is a second schematic diagram of possible scheduling;
FIG. 4 is a schematic diagram of a DCI-1 scheduling PDSCHs of multiple cells;
FIG. 5 is a third schematic diagram of possible scheduling;
FIG. 6 is a first schematic diagram of different sub-carrier space (SCS) situations;
FIG. 7 is a second schematic diagram of different SCS situations;
FIG. 8 is a second flow chart of the HARQ feedback method according to an embodiment of the present application;
FIG. 9 is a third flow chart of the HARQ feedback method according to an embodiment of the present application;
FIG. 10 is a fourth flow chart of the HARQ feedback method according to an embodiment of the present application;
FIG. 11 is a first structural block diagram of a HARQ feedback device according to an embodiment of the present application;
FIG. 12 is a first module block diagram of a HARQ feedback device according to an embodiment of the present application;

FIG. 13 is a second module block diagram of the HARQ feedback device according to an embodiment of the present application;

FIG. 14 is a second structural diagram of the HARQ feedback device according to an embodiment of the present application;

FIG. 15 is a third module block diagram of the HARQ feedback device according to an embodiment of the present application;

FIG. 16 is a fourth module block diagram of the HARQ feedback device according to an embodiment of the present application.

## DETAILED DESCRIPTION

In the embodiments of the present application, the term "and/or" describes the association relationship of the associated objects, indicating that there may be three relationships. For example, A and/or B may represent: A exists alone, A and B exist at the same time, and B exists alone. The character "/" generally indicates that the associated objects before and after are in an "or" relationship.

In the embodiments of the present application, the term "plurality" refers to two or more than two, and other quantifiers are similar.

The following will be combined with the drawings in the embodiments of the present application to clearly and completely describe the technical solutions in the embodiments of the present application. Obviously, the described embodiments are only part of the embodiments of the present application, not all of the embodiments. Based on the embodiments in the present application, all other embodiments obtained by a person skilled in the art without creative work are within the scope of protection of the present application.

An embodiment of the present application provides a HARQ feedback method and device. The method and device are based on the same application concept. Since the method and device solve the problem in a similar principle, the implementation of the device and the implementation of the method can refer to each other, and the repeated parts will not be repeated herein.

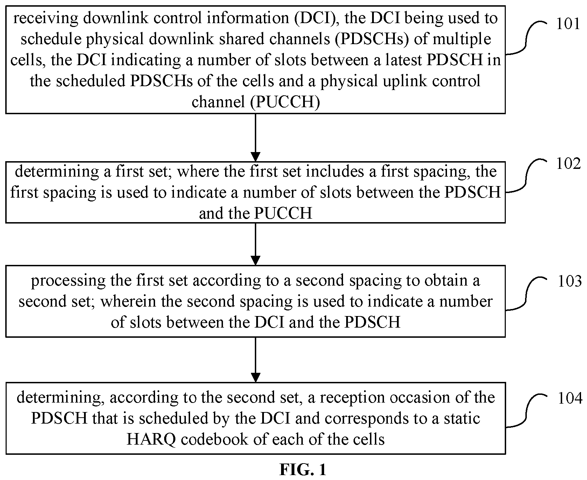

As shown in FIG. 1, a HARQ feedback method provided in an embodiment of the present application includes the following steps.

Step 101, receiving downlink control information (DCI), the DCI being used to schedule physical downlink shared channels (PDSCHs) of multiple cells, the DCI indicating a number of slots between a latest scheduled PDSCH in the scheduled PDSCHs of the cells and a physical uplink control channel (PUCCH)PDSCHs of multiple cells.

Here, the terminal receives a DCI that schedules the PDSCHs of multiple cells. It should be noted that the multiple cells with respect to the DCI scheduling may be referred to as scheduled cells.

Step 102: determine a first set; where the first set includes a first spacing, and the first spacing is used to indicate the number of slots between the PDSCH and the PUCCH.

Here, the first set is the set of the first spacings K1, and the number of slots between the latest scheduled PDSCH of the scheduled PDSCH of each cell indicated by the DCI and the PUCCH belongs to the first set, that is, the DCI indicates the K1 used by the terminal. The first set may be configured for the terminal by a network device (such as a base station) through a high-level signaling (such as radio resource control (RRC) signaling), and the terminal determines the first set by receiving the configuration information in the high-level signaling, or receives the first set in the high-level signaling.

Step 103: processing the first set according to a second spacing to obtain a second set; where the second spacing is used to indicate the number of slots between the DCI and the PDSCH.

Here, in the case where the DCI received in step 101 is DCI that schedules the PDSCHs of the multiple cells, the terminal obtains a set of extended first spacings, i.e., a second set, according to the second spacing K0 and the first set determined in step 102.

Step 104: determining, according to the second set, a reception occasion of the PDSCH corresponding to a static Hybrid Automatic Repeat Request (HARQ) codebook of each cell scheduled by the DCI.

In this step, the terminal obtains the second set according to step 103 to determine the reception occasion of the PDSCH that corresponds to the static HARQ codebook of each cell and is scheduled by the DCI.

In this way, through the above steps 101-104, after receiving the DCI and determining the first set, the terminal can expand the first set using the second spacing to obtain the second set with respect to the case where the DCI schedules the PDSCHs of multiple cells, and then use the second set to determine the reception occasion of the PDSCH that corresponds to the static HARQ codebook of each cell and scheduled by the DCI, thereby realizing the HARQ feedback in the case where one DCI schedules the PDSCHs on the multiple cells.

It should be noted that the method of the embodiment of the present application is applicable to the case where K0 of each cell corresponding to the same row index is different in the multi-cell PDSCH scheduling time domain resource allocation (TDRA) table. For example, the multi-cell scheduling TDRA table shown in Table 1 below.

Table 1

| Row index | Cell-1 | Cell-2 | Cell-3 | Cell-4 |
|---|---|---|---|---|
| 0 | K0=2; SLIV=1 | K0=3; SLIV=2 | K0=4; SLIV=3 | K0=6; SLIV=4 |
| 1 | K0=1; SLIV=5 | K0=6; SLIV=6 | K0=0; SLIV=7 | K0=2; SLIV=7 |
| 2 | K0=1; SLIV=5 | K0=3; SLIV=6 | NULL | K0=5; SLIV=7 |

Among them, NULL indicates that the corresponding (Start and Length Indicator Value (SLIV) is invalid. For example, in Table 1, when the row index is 2, cell-3 is not scheduled, that is, it can be understood that cell-3 is only configured with a 2-row TDRA table. It should be known that the TDRA table can be a default TDRA table configured by the base station through RRC signaling or specified in the protocol.

It should be noted that, when the DCI schedules the PDSCHs of multiple cells, the multiple cells may be some or all of the cells in the TDRA table. The DCI may indicate the TDRA row index of each of the multiple cells.

Optionally, in this embodiment, for the multiple cells, the first sets may be the same or different.

It should also be noted that, in this embodiment, since the DCI is used to schedule the PDSCHs of multiple cells, the second set determined in step 102 may include multiple second sets, such as the second sets corresponding to the multiple cells respectively.

In an embodiment of the present application, it also provides a HARQ feedback method, including:

receiving downlink control information (DCI), the DCI scheduling physical downlink shared channels (PDSCHs) of multiple cells, the DCI indicating the number of slots between the latest PDSCH in the PDSCHs of the scheduled cells and the physical uplink control channel (PUCCH);
determining, according to the second set, a reception occasion of the PDSCH that corresponds to a static HARQ codebook of each cell and scheduled by the DCI;

The second set is obtained according to the first set and the second spacing, the first set includes the first spacing, the first spacing is used to indicate the number of slots between the PDSCH and the PUCCH, and the second spacing is used to indicate the number of slots between the DCI and the PDSCH.

Optionally, the second set is obtained according to the first set and the second spacing (or step 103), including:

obtaining the respective second spacing corresponding to each of the cells in a time domain resource allocation (TDRA) table;
performing the following for each first cell of the cells:

determining, according to the obtained second spacing, an adjustment parameter corresponding to each row index of the first cell in the TDRA table;
performing following spacing processing operations based on each of the row indexes of different rows of the first cell in the TDRA table:

determining, according to an adjustment parameter of an $(i+1)^{th}$ row index, an adjusted first set corresponding to the $(i+1)^{th}$ row index, where i is an integer greater than or equal to 1;
determining an $(i+1)^{th}$ spacing processing result of the $(i+1)^{th}$ row index according to the adjusted first set and a determined $i^{th}$ spacing processing result of the $i^{th}$ row index, and then proceeding to perform a spacing processing operation corresponding to an $(i+2)^{th}$ row index;
after obtaining a spacing processing result corresponding to a last row index of the first cell in the TDRA table, determining the obtained spacing processing result corresponding to the last row index as the second set of the first cell.

The second spacing corresponding to each cell in the time domain resource allocation (TDRA) table is obtained.

That is, the terminal will obtain K0 corresponding to multiple scheduled cells based on the TDRA table. Here, the K0 corresponding to each cell can be one or more. For example, as shown in Table 1, obtaining K0 corresponding to cell-3 includes: K0=4 and K0=0; obtaining K0 corresponding to cell-4 includes: K0=6, K0=2 and K0=5. When an invalid SLIV occurs in a row index, K0 is not calculated.

Afterwards, the terminal determines a second set of each cell for the scheduled multiple cells. Here, each of the multiple cells may be referred to as a first cell. The first spacing in the second set may be represented by k1.

For each first cell, the terminal performs a spacing processing operation for the $(i+1)^{th}$ row index of the first cell in the TDRA table, and after obtaining the spacing processing result corresponding to the last row index of the first cell in the TDRA table, determines the spacing processing result corresponding to the last row index as the second set of the first cell.

As shown in Table 1, the row index in the TDRA table typically starts from 0, so for the row index r, r=i-1, that is, the first row index corresponds to the row index r=0.

Therefore, the above steps for the first cell start from the second row index, that is, r=1, and perform the spacing processing operation until the maximum r value corresponding to the first cell is traversed.

Taking Table 1 as an example, it is assumed that the multiple cells include cell-1, cell-2, cell-3 and cell-4 (DCI schedules PDSCHs of multiple cells, and the multiple cells are all cells in the TDRA table). According to the above steps, the terminal will obtain respective K0 corresponding to each of cell-1, cell-2, cell-3 and cell-4. At this time, K0 corresponding to cell-1 can be recorded as (2, 1, 1), K0 corresponding to cell-2 can be recorded as (3, 6, 3), K0 corresponding to cell-3 can be recorded as (4, 0) and K0 corresponding to cell-4 can be recorded as (6, 2, 5). When determining the second set of the first cell (such as cell-3), the terminal will start with the second row index (row index 1) in Table 1 for cell-3, and determine the adjusted first set (such as set 2) of row index 1 corresponding to cell-3 according to the adjustment parameter (such as adjustment parameter 2) of row index 1 corresponding to cell-3, and then obtain the second spacing processing result of row index 1 corresponding to cell-3 according to set 2 and the first spacing processing result of row index 0 corresponding to cell-3. Since the maximum r value corresponding to cell-3 is 1, the second spacing processing result of row index 1 corresponding to cell-3 is determined to be the second set of cell-3.

It should be noted that, if the maximum r value corresponding to cell-3 is 2, it is also necessary to determine the adjusted first set (such as set 3) of row index 2 corresponding to cell-3 according to the adjustment parameter of row index 2 corresponding to cell-3, and then obtain the third spacing processing result of row index 2 corresponding to cell-3 according to set 3 and the second spacing processing result of row index 1 corresponding to cell-3. At this time, the third spacing processing result of row index 2 corresponding to cell-3 is the second set of cell-3.

Optionally, the $i^{th}$ spacing processing result of the $i^{th}$ row index is determined in the following manner, including:

when i=1, determining an adjusted first set corresponding to the first row index according to the adjustment parameter of the first row index corresponding to the first cell;
obtaining a first spacing processing result of the first row index according to the adjusted first set of the first row index, or obtaining a first spacing processing result of the first row index according to the first set and the adjusted first set corresponding to the first row index.

The first spacing processing result corresponding to the first row index (row index 0) of the first cell (referred to as the first spacing processing result of the first cell) can be the adjusted first set of the first row index corresponding to the first cell, or it can be the union of the first set and the adjusted first set of the first row index corresponding to the first cell.

Optionally, in this embodiment, determining, according to the obtained second spacing, the adjustment parameter corresponding to each row index of the first cell in the TDRA table includes:

for one of the row indexes of the first cell in the TDRA table, determining an adjustment parameter of the row index in the first cell based on a second spacing corresponding to the row index in the first cell and a maximum second spacing corresponding to the row index in the cells.

That is to say, when determining the adjustment parameter of the first set under a row index, the K0 of the first cell corresponding to the row index and the maximum K0 of the multiple cells corresponding to the row index are used. For example, in the above example, the adjustment parameter 1 of the row index 0 corresponding to cell-3 is determined based on the K0 of cell-3 corresponding to row index 0 (K0=4) and the maximum K0 of cells-1, cell-2, cell-3 and cell-4 corresponding to row index 0 (i.e., max(2,3,4,6)=6).

Optionally, the determining, based on the second spacing corresponding to the row index in the first cell and the maximum second spacing corresponding to the row index in the multiple cells, an adjustment parameter of the row index in the first cell includes:

calculating the adjustment parameter of the first cell corresponding to the row index r $\Delta K_{0,r,c}$ through a formula $\Delta K_{0,r,c} = max(K_{0,r,1}, \dots, K_{0,r,n}, \dots, K_{0,r,N}) - K_{0,r,c}$;
$K_{0,r,n}$ represents the second spacing corresponding to the row index r of cell n in the multiple cells, N represents a number of the cells, and $K_{0,r,c}$ represents the second spacing corresponding to the row index r in the first cell c.

Thus, in the above example, the adjustment parameter (i.e., $\Delta K_{0,0,3}$) corresponding to row index 0 of cell-3 is calculated as: $\Delta K_{0,0,3} = max(K_{0,0,1}, \dots, K_{0,0,4}) - K_{0,0,3} = max(2, 3, 4, 6)-4=6-4=2$. It should be noted that, the adjustment parameter (i.e., $\Delta K_{0,1,3}$) of cell-3 of corresponding to row index 1 can also be obtained, $\Delta K_{0,1,3}=6$.

Optionally, in this embodiment, determining the adjusted first set corresponding to the $(i+1)^{th}$ row index according to the adjustment parameter of the $(i+1)^{th}$ row index, where i is an integer greater than or equal to 1, includes:
for each element in the first set, the respective adjustment parameter of the $(i+1)^{th}$ row index is added to obtain the adjusted first set of the $(i+1)^{th}$ row index.

That is, the terminal needs to obtain the adjusted first set corresponding to the first row index of the first cell by adding the adjustment parameter of the first cell under the first row index to each K1 in the first set to obtain the set K1'. Specifically, the adjusted first set corresponding to the row index r of the first cell (such as cell c) can be recorded as the set of K1'$_{r,c}$. Here, the first spacing in the set of K1'$_{r,c}$ = the first spacing of the set of K1 +$\Delta K_{0,r,c}$.

Continuing with the above example, the adjustment parameter 1 of the row index 0 corresponding to cell-3 is equal to 2, and the adjustment parameter 2 of the row index 1 corresponding to cell-3 is equal to 6. If it is assumed that the first set is {2,4,6}, then the adjusted first set of the row index 0 corresponding to cell-3 is {2+2,4+2,6+2} = {4,6,8}, and the adjusted first set of the row index 1 corresponding to cell-3 is {2+6,4+6,6+6}={8,10,12}.

Optionally, determining, according to the adjusted first set and the i$^{th}$ spacing processing result of the i$^{th}$ row index corresponding to the first cell, the (i+1)$^{th}$ spacing processing result of the first cell includes:

joining the adjusted first set and the i$^{th}$ spacing processing result corresponding to the i$^{th}$ row index of the first cell to obtain a union result, and taking the union result as the (i+1)$^{th}$ spacing processing result corresponding to the (i+1)$^{th}$ row index of the first cell.

That is to say, the terminal takes the union of the adjusted first set of the (i+1)$^{th}$ row index corresponding to the first cell and the i$^{th}$ spacing processing result of the i$^{th}$ row index corresponding to the first cell as the (i+1)$^{th}$ spacing processing result of the (i+1)$^{th}$ row index corresponding to the first cell.

It should also be noted that, in this embodiment, for the first cell, if it also supports single-cell scheduling and with respect to the corresponding row index 0, the adjusted first set of the row index 0 and the first set are joined to obtain a union set, which is used as the first spacing processing result of the first cell corresponding to the first row index; if it does not support single-cell scheduling and with respect to the corresponding row index 0, the adjusted first set of the row index 0 is used as the first spacing processing result of the first cell corresponding to the first row index.

Continuing with the above example, the adjusted first set of row index 0 corresponding to cell-3 is {4,6,8}, and the adjusted first set of row index 1 corresponding to cell-3 is {8,10,12}. If cell-3 supports the single-cell scheduling, the first spacing processing result of row index 0 corresponding to cell-3 is {2,4,6} U {4,6,8} = {2,4,6,8}; and the second spacing processing result of row index 1 corresponding to cell-3 is {8,10,12} U {2,4,6,8} = {2,4,6,8,10,12}. Therefore, the second set of cell-3 is {2,4,6,8,10,12}.

In this embodiment, the i$^{th}$ spacing processing result of the first cell corresponding to the i$^{th}$ row index can be represented by a set of $K_{1,T}$.

Therefore, in this embodiment, the following Table 2 can be obtained for cell-3 (since Table 2 is for cell-3, the identifier of c=3 is omitted):

Table 2

| Row Index | K1 Set (First Set) | $max(K_{0,r,1}, ... , K_{0,r,n}, ... , K_{0,r,N})$ | $\Delta K_{0,r}$ | $K_{1,T}$ Set |
|---|---|---|---|---|
| r = 0 | {2,4,6} | max(2,3,4,6)=6 | 2 | union of {2,4,6} and {2+2,4+2,6+2} = {2,4,6,8} |
| r = 1 | {2,4,6} | max(1,6,0,2)=6 | 6 | union of {2,4,6,8} and {2+6,4+6,6+6} ={2,4,6,8,10,12} |
| r = 2 | {2,4,6} | max(1,3,null,5)=5 | none | |

If cell-3 does not support the single-cell scheduling, the first spacing processing result of row index 0 corresponding to cell-3 is { empty } U {4,6,8} = {4,6,8}. and the second spacing processing result of row index 1 corresponding to cell-3 is {8,10,12} U {4,6,8} = {4,6,8,10,12}. Therefore, the second set of cell-3 is {4,6,8,10,12}.

Therefore, in this embodiment, the following Table 3 can be obtained for Cell-3 (since Table 3 is for cell-3, the identifier of c=3 is omitted):

Table 3

| Row Index | K1 Set (First Set) | $max(K_{0,r,1}, ... , K_{0,r,n}, ... , K_{0,r,N})$ | $\Delta K_{0,r}$ | $K_{1,T}$ Set |
|---|---|---|---|---|
| r = 0 | {2,4,6} | max(2,3,4,6)=6 | 2 | union of {empty} and {2+2,4+2,6+2} = {4,6,8} |
| r = 1 | {2,4,6} | max(1,6,0,2)=6 | 6 | union of {2+6,4+6,6+6} and {4,6,8} ={4,6,8,10,12} |
| r = 2 | {2,4,6} | max(1,3,null,5)=5 | none | |

Thus, as an optional example 1, the terminal receives DCI, which schedules PDSCHs of cell-1, cell-2, cell-3 and cell-4, and the terminal also receives the first set {2,4,6}, then the terminal implements the following steps.

Step 1: receiving the TDRA table configured by the base station through RRC signaling, as shown in Table 1, which will not be repeated here.

Step 2: determining a second set of each cell corresponding to the DCI scheduling according to the TDRA table configured by the base station and the first set.

Case 1: for a cell that supports single-cell scheduling (i.e., a cell that support multi-cell scheduling and single-cell scheduling), a follow step 1a /2a is implemented.

Step 1a: when r=0 $K_{1,T}$, enabling a set of the cell to be the union of the first set and the adjusted first set.

Step 2a: traversing all rows of the cell in the TDRA table, and obtaining the $K_{1,T}$ set corresponding to each row index based on the adjusted first set corresponding to the row index and the $K_{1,T}$ set corresponding to the previous row index. After the traversal is completed, the $K_{1,T}$ set corresponding to the maximum row index of the cell is the second set of the cell. Assuming that the cell-3 supports single-cell scheduling, the corresponding $K_{1,T}$ set is shown in Table 2 above; assuming that the cell-1 supports single-cell scheduling, the corresponding $K_{1,T}$ set is shown in Table 4 below (since Table 4 is for the cell-1, the identifier of c=1 is omitted):

Table 4

| Row Index | K1 Set (First Set) | $max(K_{0,r,1}, \dots, K_{0,r,n}, \dots, K_{0,r,N})$ | $\Delta K_{0,r}$ | $K_{1,T}$ Set ( |
|---|---|---|---|---|
| $r = 0$ | {2,4,6} | max(2,3,4,6)=6 | 4 | union of {2,4,6} and {2+4,4+4,6+4} = {2,4,6,8,10} |
| $r = 1$ | {2,4,6} | max(1,6,0,2)=6 | 5 | union of {2,4,6,8,10} and {2+5,4+5,6+5} ={2,4,6,7,8,9,10,11} |
| $r = 2$ | {2,4,6} | max(1,3,null,5)=5 | 4 | union of {2,4,6,7,8,9,10,11} and {2+4,4+4,6+4} ={2,4,6,7,8,9,10,11} |

Assuming that the cell-2 supports the single-cell scheduling, the corresponding $K_{1,T}$ set is as shown in Table 5 (since Table 5 is for the cell-2, the identifier of c=2 is omitted):

Table 5

| Row Index | K1 Set (First Set) | $max(K_{0,r,1}, \dots, K_{0,r,n}, \dots, K_{0,r,N})$ | $\Delta K_{0,r}$ | $K_{1,T}$ Set |
|---|---|---|---|---|
| $r = 0$ | {2,4,6} | max(2,3,4,6)=6 | 3 | union of {2,4,6} and {2+3,4+3,6+3} = {2,4,5,6,7,9} |
| $r = 1$ | {2,4,6} | max(1,6,0,2)=6 | 0 | union of {2+0,4+0,6+0} and {2,4,5,6,7, 9} ={2,4,5,6,7, 9} |
| $r = 2$ | {2,4,6} | max(1,3,null,5) | 2 | **union** {2+2,4+2,6+2} and {2,4,5,6,7,9}={2,4,6,7,8,9} |

Case 2: for a cell that does not support single-cell scheduling (i.e., a cell that supports multi-cell scheduling but does not support single-cell scheduling), a follow step 1b/2b is implemented.

Step 1b: when r=0, enabling $K_{1,T}$ set of the cell to be a union of the empty set and the adjusted first set.

Step 2b: traversing all rows of the cell in the TDRA table, and obtaining the $K_{1,T}$ set corresponding to each row index based on the adjusted first set corresponding to the row index and the $K_{1,T}$ set corresponding to the previous row index. After the traversal is completed, the $K_{1,T}$ set corresponding to the maximum row index of the cell is the second set of the cell.

Assuming that the cell-3 does not support single-cell scheduling, the corresponding $K_{1,T}$ set is shown in Table 3 above; assuming that the cell-1 does not support single-cell scheduling, the corresponding $K_{1,T}$ set is shown in Table 6 below (since Table 6 is for the cell-1, the identifier of c=1 is omitted):

Table 6

| Row Index | K1 Set (First Set) | $max(K_{0,r,1}, \dots, K_{0,r,n}, \dots, K_{0,r,N})$ | $\Delta K_{0,r}$ | $K_{1,T}$ Set |
|---|---|---|---|---|
| $r = 0$ | {2,4,6} | max(2,3,4,6)=6 | 4 | union of {empty} and {2+4,4+4,6+4} = {6,8,10} |
| $r=1$ | {2,4,6} | max(1,6,0,2)=6 | 5 | union of {2+5,4+5,6+5} and {6,8,10} ={6,7,8,9,10,11} |
| $r = 2$ | {2,4,6} | max(1,3,null,5)=5 | 4 | union of {2+4,4+4,6+4} and {6,7,8,9,10,11} ={6,7,8,9,10,11} |

Assuming that the cell-2 does not support single-cell scheduling, the corresponding $K_{1,T}$ set is as follows in Table 7 (since Table 7 is for cell-2, the identifier of c=2 is omitted):

Table 7

| Row Index | K1 Set (First Set) | $max(K_{0,r,1}, \ldots, K_{0,r,n}, \ldots, K_{0,r,N})$ | $\Delta K_{0,r}$ | $K_{1,T}$ Set |
|---|---|---|---|---|
| r = 0 | {2,4,6} | max(2,3,4,6)=6 | 3 | union of {empty} and {2+3,4+3,6+3} = {5,7,9} |
| r = 1 | {2,4,6} | max(1,6,0,2)=6 | 0 | union of {2+0,4+0,6+0} and {5,7, 9} ={2,4,5,6,7, 9} |
| r = 2 | {2,4,6} | max(1,3,null,5)=5 | 2 | union of {2+2,4+2,6+2} and {2,4,5,6,7,9} ={2,4,6,7,8,9} |

In addition, the network device can directly configure the second set through high-level signaling, such as sending RRC, to configure the respective second sets corresponding to the multiple cells when the DCI schedules the PDSCHs of multiple cells. The terminal can directly use the configured second set to determine the reception occasion of the PDSCH.
The embodiment of the present application further provides a HARQ feedback method, which is performed by a terminal, and the method includes:

receiving downlink control information (DCI), the DCI scheduling physical downlink shared channels (PDSCHs) of multiple cells, the DCI indicating the number of slots between the latest PDSCH in the PDSCHs of the scheduled cells and the physical uplink control channel (PUCCH);
determining, according to a second set configured by the network device, a reception occasion of the PDSCH that corresponds to the static HARQ codebook of each cell and scheduled by the DCI is determined.

Optionally, in the embodiments of the present application, the recorded second set is configured through high-layer signaling.
Specifically, for a cell X, if the terminal is configured to schedule the PDSCH of the cell X through multi-cell scheduling signaling, the network device can configure the second set for the terminal through high-layer signaling, and the second set can be obtained in at least one of the following modes.
Mode 1: when the cell is not configured with single-cell scheduling signaling or an activated part bandwidth (BWP) of the cell is in a sleep state, the second set configured through the high-layer signaling includes at least one of the following methods:

method 1: a first K1 value set that is of the cells and configured through the high-layer signaling, where the K1 represents the number of slots between the PDSCH and the PUCCH;
method 2: a first set that is used for multi-cell scheduling and configured through the high-layer signaling, where the first set includes a first spacing, and the first spacing is used to indicate the number of slots between the PDSCH and the PUCCH;
method 3: a second K1 value set, where the second K1 value set is determined according to the value of the subcarrier spacing of the PUCCH used to carry the HARQ-ACK information, and the values of the subcarrier spacing are different, and the K1 values included in the second K1 value set are the same or different;
method 4: the first set corresponding to the DCI format 1-1 configured by the network device;
method 5: the first set corresponding to a DCI format 1-2 configured by the network device; or
method 6: a union set obtained by joining a first set corresponding to a DCI format 1-1 configured by the network device and a first set corresponding to a DCI format 1-2 configured by the network device .

It should be noted that, in the embodiments of the present application, the "cell is not configured with single-cell scheduling signaling" can be understood as: from the perspective of the terminal, there is no single-cell scheduling signaling configured for scheduling PDSCH, that is, the terminal does not receive the configuration information for single-cell scheduling signaling detection in the cell, or the base station does not configure the UE to detect single-cell scheduling signaling for the cell, where the format of the single-cell scheduling signaling includes DCI format 1-0, DCI format 1-1, DCI format 1-2 or another signaling format in which one DCI only schedules PDSCH data of one more cell.
With respect to the first set used for the multi-cell scheduling configured by high-level signaling, usually for multi-cell scheduling, the PDSCH corresponding to the scheduled cell is the latest one among the scheduled PDSCHs of the cells. "The PDSCH corresponding to the scheduled cell being the latest one among the scheduled PDSCHs of the cells" can be understood as: in the scenario of multi-cell scheduling, the multi-cell scheduling signaling schedules the PDSCHs of multiple cells, and the scheduled PDSCH of the cell here is the latest one in the slot among the PDSCHs that correspond to the multiple cells and scheduled by the multi-cell scheduling signaling.

The second K1 value set is determined according to the value of the subcarrier spacing of the PUCCH used to carry HARQ-ACK information, specifically including: if the subcarrier spacing of the PUCCH used to carry HARQ-ACK information is less than or equal to 120KHz, K1 is {1, 2, 3, 4, 5, 6, 7, 8} in the second K1 value set. If the subcarrier spacing is equal to 480KHz, K1 is {7, 8, 12, 16, 20, 24, 28, 32} in the second K1 value set. If the subcarrier spacing is equal to 960KHz, K1 is {13, 16, 24, 32, 40, 48, 56, 64} in the second K1 value set.

Assuming that the first set corresponding to the DCI format 1-1 configured by the network device is expressed as dl-DataToUL-ACK, and the first set corresponding to the DCI format 1-2 configured by the network device is expressed as dl-DataToUL-ACK-1-2, then a union set of the first set corresponding to the DCI format 1-1 configured by the network device and the first set corresponding to the DCI format 1-2 configured by the network device can be expressed as the union set of dl-DataToUL-ACK and dl-DataToUL-ACK -1-2.

Mode 2: if the cell is configured with single-cell scheduling signaling and the single-cell scheduling signaling format is only a fallback format, the second set configured through the high-layer signaling includes at least one of the following methods:

method 1: a first K1 value set that is of the cells and configured through the high-layer signaling, where the K1 represents the number of slots between the PDSCH and the PUCCH;
method 2: a second K1 value set, where the second K1 value set is determined according to the value of the subcarrier spacing of the PUCCH used to carry the HARQ-ACK information, and the values of the subcarrier spacing are different, and the K1 values included in the second K1 value set are the same or different; or
method 3: a union set obtained by joining the first K1 value set and the second K1 value set.

It should be noted that the fallback format is the DCI format 1-0, and no other DCI signaling format is configured to schedule only one more cell PDSCH data, such as DCI format 1-1 is not configured and DCI format 1-2 is also not configured.

The second K1 value set is determined according to the value of the subcarrier spacing of the PUCCH used to carry HARQ-ACK information, specifically including: if the subcarrier spacing of the PUCCH used to carry HARQ-ACK information is less than or equal to 120KHz, K1 is {1, 2, 3, 4, 5, 6, 7, 8} in the second K1 value set. If the subcarrier spacing is equal to 480KHz, K1 is {7, 8, 12, 16, 20, 24, 28, 32} in the second K1 value set. If the subcarrier spacing is equal to 960KHz, K1 is {13, 16, 24, 32, 40, 48, 56, 64} in the second K1 value set.

Mode 3: if the cell is configured with single-cell scheduling signaling, the single-cell scheduling signaling is of a DCI format 1-1, and the cell is not configured with scheduling signaling of DCI format 1-2, the second set configured through the high-layer signaling includes at least one of the following methods:

method 1: a first K1 value set that is of the cells and configured through the high-layer signaling, where the K1 represents the number of slots between the PDSCH and the PUCCH;
method 2: the first set corresponding to the DCI format 1-1 configured by the network device; or
method 3: a union set obtained by joining the first K1 value set and the first set corresponding to the DCI format 1-1 configured by the network device.

Mode 4: if the cell is configured with single-cell scheduling signaling, the single-cell scheduling signaling is of a DCI format 1-2, and the cell is not configured with scheduling signaling of DCI format 1-1, then the second set configured through the high-layer signaling includes at least one of the following methods:

method 1: a first K1 value set that is of the cells and configured through the high-layer signaling, where the K1 represents the number of slots between the PDSCH and the PUCCH;
method 2: the first set corresponding to a DCI format 1-2 configured by the network device; or
method 3: a union set obtained by joining the first K1 value set with the first set corresponding to the DCI format 1-2 configured by the network device.

Mode 5: if the cell is configured with single-cell scheduling signaling, and the single-cell scheduling signaling is of the DCI format 1-2 and DCI format 1-1, the second set configured through the high-layer signaling includes at least one of the following methods:

method 1: a union set obtained by joining a first set corresponding to the DCI format 1-1 configured by the network device and a first set corresponding to the DCI format 1-2 configured by the network device;
method 2: a first K1 value set of the cell configured by high-level signaling, where the K1 represents the number of slots between the PDSCH and the PUCCH; or
method 3: a set obtained by joining the union set and the first K1 value set.

It should be noted that the above-mentioned five methods related to the content of the second set are also applicable to network devices.

In addition, in this embodiment, considering that in the multi-cell scheduling process, the network device indicates the slot relationship between the PUCCH and the scheduled PDSCH through the PUCCH timing indication information (k1-timing) in the DCI, where the PUCCH is used to feedback the channel of the hybrid automatic repeat request acknowledgement (HARQ-ACK); the k1-timing indication range is based on the first set; when calculating the reception occasion of the PDSCH of the static codebook, for each scheduled cell, all values are cycled according to the newly calculated second set, i.e., the $K_{1, T}$ set; since the range of the second set is larger than that of the first set, there is some redundant SLIV information relative to all SLIV rows of the TDRA of the scheduling cell, which needs to be identified and pruned.

Therefore, optionally, the method (or after step 103) further includes:

determining, according to the TDRA table and the second set of the first cell, a valid start and length indicator value (SLIV) corresponding to each first spacing in the second set.

Therefore, based on the effective SLIV, the row index to be scheduled in the TDRA table can be determined.

Optionally, determining, according to the TDRA table and the second set of the first cell, a valid start and length indicator value (SLIV) corresponding to each first spacing in the second set includes:

deleting redundant SLIVs in all SLIVs corresponding to the first spacing based on the TDRA table and the second set of the first cell; or

selecting the SLIV corresponding to the feedback of HARQ-ACK information on the PUCCH indicated by the first spacing as the valid SLIV based on the TDRA table and the second set of the first cell.

deleting the redundant SLIVs in all SLIVs corresponding to the first spacing based on the TDRA table and the second set of the first cell is determined by analyzing all scheduling possibilities based on the value of the first spacing in the second set.

The multi-cell scheduling TDRA table configured by the network device is as shown in Table 1 above. For cell-3 that does not support single-cell scheduling, as shown in Table 3, the second set is determined to be {4, 6, 8, 10, 12}.

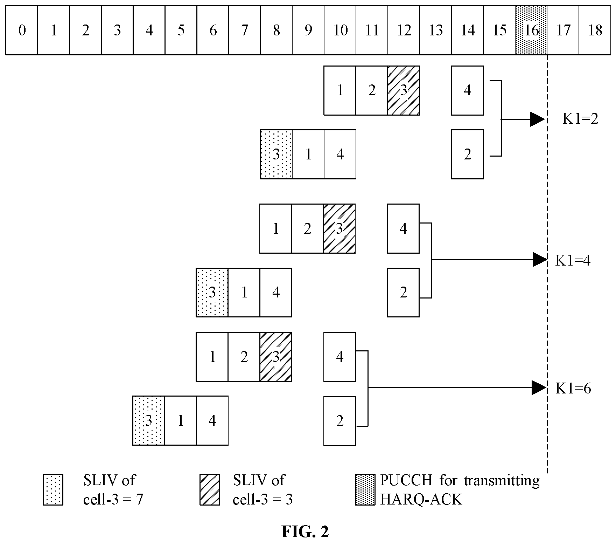

Therefore, based on the second set, all scheduling possibilities are shown in FIG. 2. Thus, the SLIV deleted from the TDRA table and the retained SLIV, i.e., the set R, are shown in Table 8 below.

Table 8

| k1 of the second set | All original SLIV of cell-3 | Final retained $R$ | Remark |
|---|---|---|---|
| $k1 = 4$ | SLIV={3,7} | {3}, | Delete {SLIV=7} |
| $k1 = 6$ | SLIV={3,7} | {3} | Delete {SLIV=7} |
| $k1 = 8$ | SLIV={3,7} | {3, 7} | No deletion |
| $k1 = 10$ | SLIV={3,7} | {7} | Delete {SLIV=3} |
| $k1 = 12$ | SLIV={3,7} | {7} | Delete {SLIV=3} |

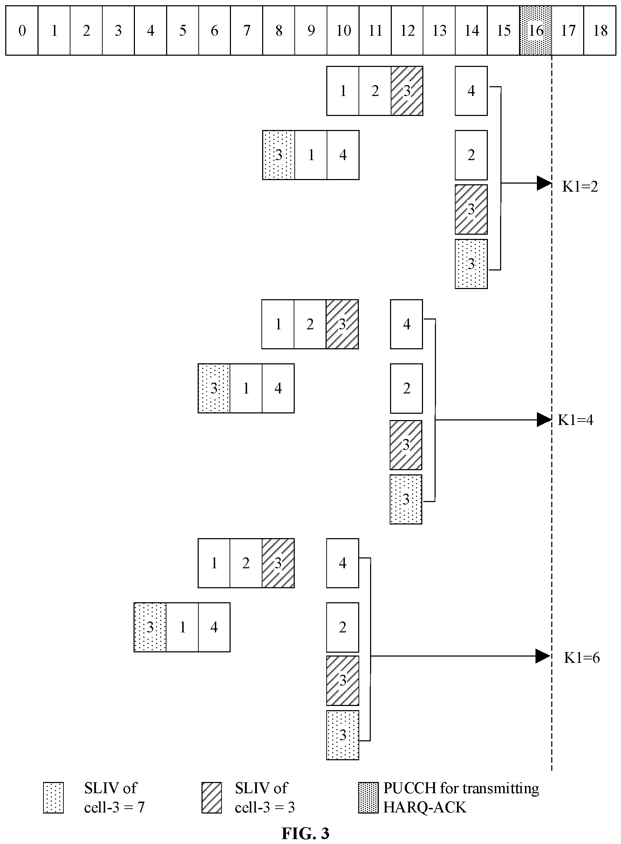

The multi-cell scheduling TDRA table configured by the network device is shown in Table 1 above, and the cell-3 supporting single-cell scheduling is shown in Table 2, and the second set is determined to be {2, 4, 6, 8, 10, 12 }. Therefore, based on the second set, all scheduling possibilities are shown in FIG. 3, so the SLIV deleted from the TDRA table and the retained SLIV, i.e., the set R, are shown in Table 9 below.

Table 9

| k1 of the second set | All original SLIV of cell-3 | Final retained $R$ | Remark |
|---|---|---|---|
| $k1 = 2$ | SLIV={3,7} | SLIV={3,7} | No deletion |
| $k1 = 4$ | SLIV={3,7} | SLIV={3,7} | No deletion |
| $k1 = 6$ | SLIV={3,7} | SLIV={3,7} | No deletion |
| $k1 = 8$ | SLIV={3,7} | SLIV={3,7} | No deletion |
| $k1 = 10$ | SLIV={3,7} | {7 } | Delete {SLIV=3} |
| $k1 = 12$ | SLIV={3,7} | {7 } | Delete {SLIV=3} |

In this embodiment, optionally, on one hand, selecting the SLIV corresponding to the feedback of HARQ-ACK information on the PUCCH indicated by the first spacing as the valid SLIV based on the TDRA table and the second set of the first cell, includes:

when the first cell does not support single-cell scheduling, obtaining an adjusted first set corresponding to each row index of the first cell;
when the first spacing belongs to the adjusted first set corresponding to the third row index, determining the effective SLIV of the first spacing at the third row index by the SLIV of the third row index and the effective SLIV of the fourth row index;
the fourth row index is a previous row index of the third row index.

Here, the effective SLIV of the first spacing at the third row index is determined by the SLIV of the third row index and the effective SLIV of the fourth row index, that is, the union of the SLIV of the third row index and the effective SLIV of the fourth row index is taken as the effective SLIV of the first spacing at the third row index.

It should be noted that, if the third row index is 0, since there is no corresponding fourth row index, at this time, the first spacing belongs to the adjusted first set corresponding to the third row index, then the effective SLIV of r=0 is the SLIV value of the first cell in the TDRA table when r=0.

Therefore, for the first cell that does not support the single-cell scheduling, after obtaining the adjusted first set corresponding to each row index, the effective SLIV of the first spacing in each row index can be determined by traversing the row index corresponding to the cell c for a first spacing in the second set of the first cell. It should be noted that, the union of the effective SLIV of the respective first spacing at each row index is the effective SLIV of the first spacing.

For example, for the first spacing in the second set of the first cell, such as k1=4, assuming that the row index of the first cell includes 0 and 1, then the traversing is performed, such that when the third row index is 0, it determines whether k1=4 belongs to the adjusted first set when r=0. If it does, the value of the SLIV of the first cell at r=0 in the TDRA table can be used as the valid SLIV of k1=4 and r=0; when the third row index is 1, it determines whether k1=4 belongs to the adjusted first set when r=1. If it does, the union of the valid SLIV of the first cell at k1=4 and r=0 and the SLIV of the first cell in the TDRA table at r=1 can be used as the valid SLIV of the first cell at k1=4 and r=1.

Thus, if cell-3 does not support single-cell scheduling, as shown in Table 3, the second set of cell-3 is {4,6,8,10,12}; and when r=0, the adjusted first set $K1'_{0,3}$ set is {4,6,8}; when r=1, the adjusted first set $K1'_{1,3}$ set is {8,10,12}. Therefore, according to the above method, the effective SLIV of each first spacing in the second set of cell-3, that is, the set $R_{k1}$, is shown in Table 10 below.

Table 10

| k1 of the second set | Original SLIV of cell-3 corresponding to row index | Adjusted first set corresponding to row index | Determination result | $R_{k1}$ |
|---|---|---|---|---|
| $k1 = 4$ | r=0, SLIV=3 | {4,6,8} | $k1 \in K1'_{0,3}$ | $R_4 = \{SLIV = 3\}$ |
| | r=1, SLIV=7 | {8,10,12} | k1 not belong to $K1'_{1,3}$ | |
| $k1 = 6$ | r=0, SLIV=3 | {4,6,8} | $k1 \in K1'_{0,3}$ | $R_6 = \{SLIV = 3\}$ |
| | r=1, SLIV=7 | {8,10,12} | k1 not belong to $K1'_{1,3}$ | |
| $k1 = 8$ | r=0, SLIV=3 | {4,6,8} | $k1 \in K1'_{0,3}$ | $R_8 = \{SLIV = 3\}$ |
| | r=1, SLIV=7 | {8,10,12} | $k1 \in K1'_{1,3}$ | $R_8 = \{SLIV = 3, 7\}$ |
| $k1 = 10$ | r=0, SLIV=3 | {4,6,8} | k1 not belong to $K1'_{0,3}$ | |
| | r=1, SLIV=7 | {8,10,12} | $k1 \in K1'_{1,3}$ | $R_{10} = \{SLIV = 7\}$ |
| $k1 = 12$ | r=0, SLIV=3 | {4,6,8} | k1 not belong to $K1'_{0,3}$ | |
| | r=1, SLIV=7 | {8,10,12} | $k1 \in K1'_{1,3}$ | $R_{10} = \{SLIV = 7\}$ |

In this embodiment, optionally, on the other hand, selecting the SLIV corresponding to the feedback of HARQ-ACK information on the PUCCH indicated by the first spacing as the valid SLIV based on the TDRA table and the second set of the first cell includes:

in a case where the first cell supports single-cell scheduling, obtaining an adjusted first set corresponding to each row index of the first cell;

determining a fourth set corresponding to the fifth row index according to the first set and the adjusted first set corresponding to the fifth row index;

if the first spacing belongs to the fourth set corresponding to the fifth row index, determining the effective SLIV of the first spacing at the fifth row index by the SLIV of the fifth row index and the effective SLIV of the sixth row index; the sixth row index is the previous row index of the fifth row index.

Here, based on the first set and the adjusted first set corresponding to the fifth row index, the fourth set corresponding to the fifth row index is determined, that is, the union of the first set and the adjusted first set corresponding to the fifth row index is taken as the fourth set corresponding to the fifth row index.

Specifically, the fourth set corresponding to the row index r of the cell c can be recorded as $K1''_{r,c}$ set. $K1''_{r,c}$ set == K1 set $\cup$ $K1'_{r,c}$ set.

Here, the effective SLIV of the first spacing at the fifth row index is determined by the SLIV of the fifth row index and the effective SLIV of the sixth row index, that is, the union of the SLIV of the fifth row index and the effective SLIV of the sixth row index is taken as the effective SLIV of the first spacing at the fifth row index.

It should be noted that, if the fifth row index is 0, since there is no corresponding sixth row index, at this time, the first spacing belongs to the fourth set corresponding to the fifth row index, then the effective SLIV of r=0 is the SLIV value of the first cell in the TDRA table when r=0.

Therefore, for the first cell supporting single-cell scheduling, after obtaining the adjusted first set corresponding to each row index, the fourth set corresponding to each row index can be further obtained, and then the row index corresponding to the cell c is traversed for a first spacing in the second set of the first cell to respectively determine the effective SLIV of the first spacing at each row index. It should be noted that, the union of the effective SLIV of the respective first spacing at each row index is the effective SLIV of the first spacing.

For example, for the first spacing in the second set of the first cell, such as k1=4, assuming that the row index of the first cell includes 0 and 1, then the traversing is performed, such that when the fifth row index is 0, it determines whether k1=4 belongs to the fourth set when r=0. If it does, the SLIV of the first cell when r=0 in the TDRA table can be used as the valid SLIV of k1=4 and r=0; when the fifth row index is 1, it determines whether k1=4 belongs to the fourth set when r=1. If it does, the union of the valid SLIV of the first cell when k1=4 and r=0 and the SLIV of the first cell in the TDRA table when r=1 can be used as the valid SLIV of the first cell when k1=4 and r=1.

Thus, if the cell-3 supports single-cell scheduling, as shown in Table 2, the second set of cell-3 is {2,4,6,8,10,12}, and when r=0, the adjusted first set $K1'_{0,3}$ is {4,6,8}; when r=1, the adjusted first set $K1'_{1,3}$ is {8,10,12}. Therefore, according to the above method, the fourth set $K1''_{0,3}$ of cell-3 when r=0 is {2,4,6,8}; the fourth set $K1''_{1,3}$ when r =1 is {2,4,6,8,10,12}, then the valid SLIV of each first spacing in the second set, i.e., the set $R_{k1}$, is shown in Table 11 below.

Table 11

| $k1$ of the second set | Original SLIV of cell-3 corresponding to the row index | Fourth set corresponding to the row index | Determination result | $R_{k1}$ |
|---|---|---|---|---|
| $k1 = 2$ | r=0, SLIV=3 | {2,4,6,8} | $k1 \in K1''_{0,3}$ | $R_2 = \{SLIV = 3\}$ |
| | r=1, SLIV=7 | {2,4,6,8,10,12} | $k1 \in K1''_{1,3}$ | $R_2 = \{SLIV = 3,7\}$ |
| $k1 = 4$ | r=0, SLIV=3 | {2,4,6,8} | $k1 \in K1''_{0,3}$ | $R_4 = \{SLIV = 3\}$ |
| | r=1, SLIV=7 | {2,4,6,8,10,12} | $k1 \in K1''_{1,3}$ | $R_4 = \{SLIV = 7$ |
| $k1 = 6$ | r=0, SLIV=3 | {2,4,6,8} | $k1 \in K1''_{0,3}$ | $R_6 = \{SLIV = 3\}$ |
| | r=1, SLIV=7 | {2,4,6,8,10,12} | $k1 \in K1''_{1,3}$ | $R_6 = \{SLIV = 3,7\}$ |
| $k1 = 8$ | r=0, SLIV=3 | {2,4,6,8} | $k1 \in K1''_{0,3}$ | $R_8 = \{SLIV = 3\}$ |
| | r=1, SLIV=7 | 2,4,6,8,10,12} | $k1 \in K1''_{1,3}$ | $R_8 = \{SLIV = 3, 7\}$ |

(continued)

| $k1$ of the second set | Original SLIV of cell-3 corresponding to the row index | Fourth set corresponding to the row index | Determination result | $R_{k1}$ |
|---|---|---|---|---|
| $k1 = 10$ | r=0, SLIV=3 | {2,4,6,8} | $k1$ not belong to $K1''_{0,3}$ | |
| | r=1, SLIV=7 | {2,4,6,8,10,12} | $k1 \in K1''_{1,3}$ | $R_{10} = \{SLIV = 7\}$ |
| $k1 = 12$ | r=0, SLIV=3 | {2,4,6,8} | $k1$ not belong to $K1''_{0,3}$ | |
| | r=1, SLIV=7 | {2,4,6,8,10,12} | $k1 \in K1''_{1,3}$ | $R_{10} = \{SLIV = 7\}$ |

It should also be noted that, the above-mentioned method of selecting the SLIV corresponding to the feedback of HARQ-ACK information on the PUCCH indicated by the first spacing as a valid SLIV based on the TDRA table and the second set of the first cell is applicable to the case where the content items of the TDRA table for single-cell scheduling and the content items of the TDRA table for multi-cell scheduling are the same. If the content items of the TDRA table for single-cell scheduling and the content items of the TDRA table for multi-cell scheduling are different, optionally, selecting the SLIV corresponding to the feedback of HARQ-ACK information on the PUCCH indicated by the first spacing as a valid SLIV based on the TDRA table and the second set of the first cell includes:

in a case where the first cell supports single-cell scheduling, obtaining an adjusted first set corresponding to each row index of the first cell;
if the first spacing belongs to the adjusted first set corresponding to the seventh row index, determining the effective SLIV of the first spacing at the seventh row index according to the SLIV of the seventh row index and the effective SLIV of the eighth row index;
if the first spacing also belongs to the first set, the effective SLIV of the first spacing is the union of the effective SLIV of the first spacing after the traversal is completed and all SLIVs corresponding to the case of the first cell supporting single-cell scheduling;
the eighth row index is the previous row index of the seventh row index.

Here, the effective SLIV of the first spacing at the seventh row index is determined according to the SLIV of the seventh row index and the effective SLIV of the eighth row index, that is, the union of the SLIV of the seventh row index and the effective SLIV of the eighth row index is taken as the effective SLIV of the first spacing at the seventh row index.
It should be noted that, if the seventh row index is 0, since there is no corresponding eighth row index, at this time, the first spacing belongs to the adjusted first set corresponding to the seventh row index, then the effective SLIV of r=0 is the SLIV of the first cell in the TDRA table when r=0.
Therefore, for the first cell supporting single-cell scheduling, after obtaining the adjusted first set corresponding to each row index, the row index corresponding to cell c can be traversed to determine the effective SLIV of the first spacing at each row index. It should be noted that, the union of the effective SLIV of the respective first spacing at each row index is the effective SLIV of the first spacing after the traversal is completed.
For example, for the first spacing in the second set of the first cell, such as k1=4, assuming that the row index of the first cell includes 0 and 1, then the traversing is performed, such that when the seventh row index is 0, it determines whether k1=4 belongs to the first set adjusted when r=0. If it does, the value of the SLIV of the first cell in the TDRA table when r=0 can be used as the effective SLIV of k1=4 and r=0; when the fifth row index is 1, it determines whether k1=4 belongs to the adjusted first set when r=1. If it does, the union of the effective SLIV of the first cell when k1=4 and r=0 and the value of the SLIV of the first cell in the TDRA table when r=1 can be used as the effective SLIV of the first cell when k1=4 and r=1. Afterwards, it is necessary to determine whether k1=4 belongs to the first set. If it does, the union of the effective SLIV determined above and all the corresponding SLIVs when the first cell supports single-cell scheduling needs to be taken as the effective SLIV of k1=4.
Generally speaking, when the PDSCH is scheduled to be sent, in order to improve the reception reliability of PDSCH, PDSCH repeated transmission is supported, and the number of repetitions repetitionNum can be determined by the following two methods:

1: semi-statically configuring repetition times, such as pdsch-AggregationFactor based on cell configuration, indicating the number of PDSCH repetitions (each repetition occupies adjacent slots); if pdsch-AggregationFactor is configured as 2, it means that each time the PDSCH scheduling is performed, the base station will repeatedly send PDSCH in two consecutive slots;

2: dynamically indicating the number of repetitions, when configuring the TDRA table, each scheduling row introduces the repetitionNumber-r16 parameter, that is, each row index in the TDRA table has a different number of repetitions.

Therefore, optionally, in this embodiment, the obtaining the second spacing corresponding to each cell in the time domain resource allocation (TDRA) table further includes:

for each cell,
obtaining a second spacing corresponding to a first cell and a number of repeated transmissions of the first cell in the TDRA table;
updating the second spacing of the first cell according to the number of repeated transmissions.

The method for obtaining the number of repeated transmissions of the first cell corresponds to the above configuration method and will not be repeated here.

Optionally, updating the second spacing corresponding to the first cell according to the number of repeated transmissions includes:

calculating the updated second spacing $K'_0$ through the formula $K'_0 = K_0 + \text{repetitionNum} - 1$;
where $K_0$ represents the second spacing before updating, and repetitionNum represents the number of repeated transmissions.

For example, the network device configures a multi-cell scheduling TDRA table through RRC, as shown in Table 12 below.

Table 12

| Row index | Cell-1 | Cell-2 | Cell-3 | Cell-4 |
|---|---|---|---|---|
| 0 | K0=2; SLIV=1; rep=2 | K0=3; SLIV=2; rep=4 | K0=4; SLIV=3 rep=1 | K0=6; SLIV=4; rep=4 |
| 1 | K0=1; SLIV=5; rep=4 | K0 =6; SLIV=6; rep=5 | K0=0; SLIV=7 rep=3 | K0=2; SLIV=7; rep=4 |
| 2 | K0=1; SLIV=5; rep=6 | K0=3; SLIV=6 rep=6 | NULL | K0=5; SLIV=7; rep=4 |

In Table 12, rep represents repetitionNumber-r16, which is the number of repetitions, i.e., the repetitionNum, of the corresponding PDSCH. It configures the repeated transmission of PDSCH scheduling according to the above table. Different row indexes correspond to different numbers of repetitions. The updated second spacing is calculated by the above formula $K'_0 = K_0 + \text{repetitionNum} - 1$, to obtain a new multi-cell scheduling TDRA table, as shown in Table 13 below.

Table 13

| Row index | Cell-1 | Cell-2 | Cell-3 | Cell-4 |
|---|---|---|---|---|
| 0 | K0=2+2-1; SLIV=1; rep=2 | K0=3+4-1; SLIV=2; rep=4 | K0=4+1-1; SLIV=3 rep=1 | K0=6+4-1; SLIV=4; rep=4 |
| 1 | K=1+4-1; SLIV=5; rep=4 | K0=6+5-1; SLIV=6; rep=5 | K0=0+3-1; SLIV=7 rep=3 | K0=2+4-1; SLIV=7; rep=4 |
| 2 | K0=1+6-1; SLIV=5; rep=6 | K0=3+6-1; SLIV=6 rep=6 | NULL | K0=5+4-1; SLIV=7; rep=4 |

Subsequent processing can be performed according to the TDRA table after updating the second spacing.

It should be understood that, in this embodiment, in order to reduce the HARQ-ACK codebook complexity of "multi-cell PDSCH scheduling", for a scenario where one DCI schedules multiple cell PDSCHs, HARQ-ACK feedback bundling can be configured to union the respective decoding result of each PDSCH (such as bit and operation) to generate 1 or 2 bits; for example: 1 DCI schedules PDSCHs of 4 cells, and the decoding and feedback information of all PDSCHs are bundled into 1 bit of information, and the results are shown in Table 14 below.

Table 14

| Scheduled cell | Cell-1 | Cell-2 | Cell-3 | Cell-4 | HARQ-ACK bundling result |
|---|---|---|---|---|---|
| PDSCH decoding result | NACK(=0) | ACK(=1) | NACK(=0) | NACK(=1) | 0&1&0&1=0 |

In Table 14, & represents a bit "AND"; in addition, the feedback information process generated by bundling can also be described as follows: when all PDSCHs participating in the bundling are decoded correctly, ACK is fed back, otherwise NACK is fed back.

For the above situation, in this embodiment, after determining the reception occasion of the PDSCHs corresponding to the static HARQ codebooks of the multiple cells according to the second set, the method further includes: in the case that HARQ-ACK feedback bundling is configured, HARQ -ACK information is determined according to the PDSCH with the latest PDSCH reception occasion among the multiple cells.

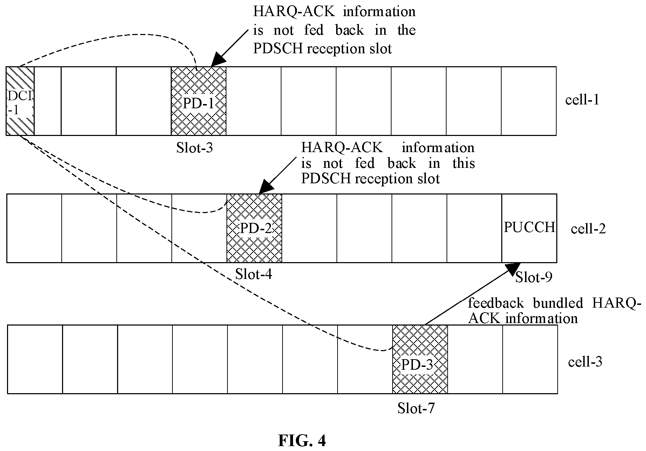

That is to say, when one DCI schedules PDSCHs of multiple cells, the terminal only calculates the latest scheduled PDSCH as the reception occasion, and other cells do not need to feedback. For example, as shown in FIG. 4, the DCI-1 schedules the PDSCHs of cell-1, cell-2, and cell-3, respectively:

- PD-1 (PDSCH1) on slot 3 of cell-1.
- PD-2 (PDSCH2) on slot 4 of cell-2;
- PD-3 (PDSCH3) on slot 7 of cell-3.

Since PD-3 is the latest in the time domain, the terminal only uses slot 7 as the PDSCH reception time and feeds back the HARQ-ACK binding values of the three PDSCHs (PD-1/2/3). Correspondingly, slot 3 of cell-1 and slot 5 of cell-2 are not used as PDSCH reception times, that is, no HARQ-ACK information is fed back.

If at least two cells are both the latest, the PDSCH of a specific one of the at least two cells is selected to determine the HARQ-ACK information. The specific cell may be determined in a default manner, such as the smallest or largest cell identifier.

It should be noted that, the network device can configure the number of bits generated for "HARQ-ACK bundling", for example, in the range of 1, 2, 4. If the HARQ-ACK feedback bundling is not configured, the determination of the HARQ-ACK information can also be carried out in the above manner.

As an optional example 2, the terminal receives the DCI, which schedules PDSCHs of cell-1, cell-2, cell-3 and cell-4, and the terminal also receives the first set {2,4,6}, then the terminal executes following steps.

Step 1: receiving the TDRA table configured by the base station through the RRC signaling, as shown in Table 15.

Table 15

| Row index | Cell-1 | Cell-2 | Cell-3 | Cell-4 |
|---|---|---|---|---|
| 0 | K0=2; SLIV=1 | K0=3; SLIV=2 | K0=4; SLIV=3 | K0=6; SLIV=4 |
| 1 | K0=1; SLIV=5 | K0=6; SLIV=6 | K0=0; SLIV=7 | K0=2; SLIV=7 |
| 2 | K0=1; SLIV=8 | K0=3; SLIV=9 | NULL | K0=5; SLIV=11 |

NULL indicates that the corresponding SLIV is invalid. For example, for Table 1, when the row index is 2, cell-3 is not scheduled, which means that cell-3 is only configured with a 2-row TDRA table.

Step 2: determining reception occasion of the PDSCH and HARQ-ACK information according to the TDRA table configured by the base station and the first set. At this time, the terminal does not need to use the second set.

Here, for cells supporting single-cell scheduling, the second set of each cell determined above is not used, and the first spacing in the first set is directly used to determine the reception occasion of the PDSCH, and the TDRA table configuration item remains unchanged.

Here, for a cell that does not support single-cell scheduling, such as cell c, it can be determined that its PDSCH is scheduled latest according to $\Delta K_{0,r,c} = 0$, and then the HARQ-ACK information is generated according to the first set and the valid SLIV set of the cell at each row index.

The specific implementation includes the following steps.

Step 1: setting the initial first spacing set = Ø and initial valid SLIV set of the cell = Ø; where Ø is an empty set.

Step 2: traversing all row indexes of the cell in the TDRA table, and obtaining the adjusted adjustment parameter corresponding to each row index, such as the adjustment parameter corresponding to the row index r of cell c $\Delta K_{0,r,c}$, and $\Delta K_{0,r,c} = max(K_{0,r,1}, \ldots, K_{0,r,n}, \ldots, K_{0,r,N}) - K_{0,r,c}$. If $\Delta K_{0,r,c}$ is equal to 0, the updated valid SLIV set = the valid SLIV set updated by the previous row index U all SLIVs of the row index r of cell c in the TDRA table. If the updated valid SLIV set $\neq$ Ø, cell c will use the first set configured by the network device to determine the reception occasion of the PDSCH. After the traversal is completed, that is, when r takes the maximum value, the updated valid SLIV set is used to calculate the number of PDSCH reception opportunities in the slot, thereby generating the feedback HARQ-ACK information.

Specifically, assuming that the network device configures the first set = {2,4,6}, the corresponding information of each row index of cell-1 is shown in the following Table 16 (since Table 16 is for cell-1, the identifier of c=1 is omitted).

Table 16

| Row Index | $K_{0,r}$ | $max(K_{0,r,1}, ... , K_{0,r,n}, ... , K_{0,r,N})$ | $\Delta K_{0,r}$ | Updated valid SLIV set |
|---|---|---|---|---|
| $r = 0$ | 2 | max(2,3,4,6)=6 | 4 | Ø |
| $r = 1$ | 1 | max(1,6,0,2)=6 | 5 | Ø |
| $r = 2$ | 1 | max(1,3,null,5)=5 | 4 | Ø |

According to Table 16, $\Delta K_{0,r,1}$ is not equal to 0, the updated valid SLIV set = Ø, and the HARQ-ACK information is not fed back on cell-1.

Assuming that the first set configured by the network device = {2,4,6}, the corresponding information of each row index of cell-2 is shown in Table 17 below (since Table 17 is for cell-2, the identifier of c=2 is omitted).

Table 17

| Row Index | $K_{0,r}$ | $max(K_{0,r,1}, ... , K_{0,r,n}, ... , K_{0,r,N})$ | $\Delta K_{0,r}$ | Updated valid SLIV set |
|---|---|---|---|---|
| $r = 0$ | 3 | max(2,3,4,6)=6 | 3 | ø |
| $r = 1$ | 6 | max(1,6,0,2)=6 | 0 | SLIV=6 |
| $r = 2$ | 3 | max(1,3,null,5)=5 | 2 | SLIV=6 |

According to Table 17, $\Delta K_{0,1,2}$ = 0, the updated valid SLIV set ≠ Ø, the HARQ-ACK information needs to be fed back on cell-2, and it determines to use the first spacing in the configured first set {2,4,6} to determine the PDSCH reception opportunity, and the number of PDSCH reception opportunities in the slot is calculated according to {SLIV = 6}.

Assuming that the first set configured by the network device = {2,4,6}, the corresponding information of each row index of cell-4 is shown in Table 18 below (since Table 18 is for cell-4, the identifier of c=4 is omitted).

Table 18

| Row Index | $K_{0,r}$ | $max(K_{0,r,1}, ... , K_{0,r,n}, ... , K_{0,r,N})$ | $\Delta K_{0,r}$ | Updated valid SLIV set |
|---|---|---|---|---|
| $r = 0$ | 6 | max(2,3,4,6)=6 | 0 | SLIV=4 |
| $r = 1$ | 2 | max(1,6,0,2)=6 | 4 | SLIV=4 |
| $r = 2$ | 5 | max(1,3,null,5)=5 | 0 | SLIV=4, SLIV=11 |

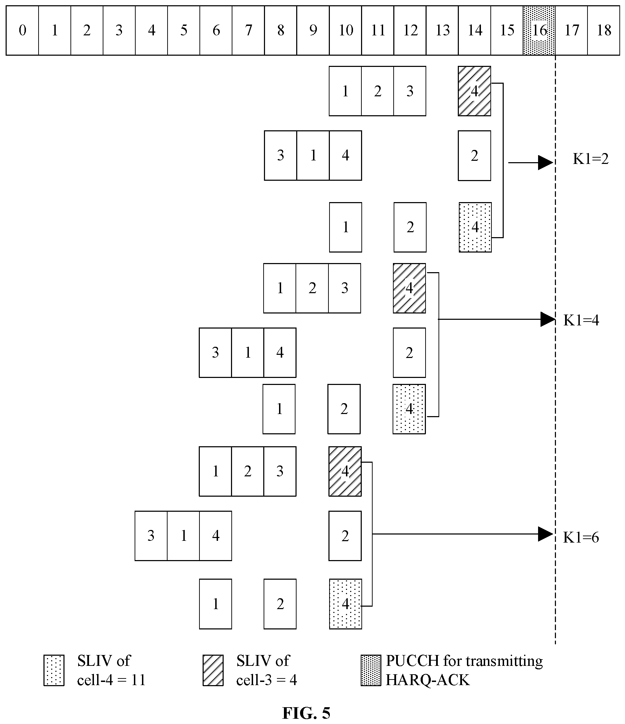

According to Table 18, $\Delta K_{0,0,4}$ = 0, $\Delta K_{0,2,4}$ = 0, the updated valid SLIV set ≠ Ø, HARQ-ACK information needs to be fed back on cell-4, and the first spacing in the configured first set {2,4,6} is used to determine the reception occasion of the PDSCH, and {SLIV = 4, SLIV = 11} is used to calculate the number of PDSCH reception opportunities in the slot. For cell-4, the scheduling possibilities are shown in FIG. 5. If the terminal receives the DCI, it indicates the PUCCH resources with HARQ-ACK feedback in slot 16. In cell-4, the terminal feeds back the bound HARQ-ACK information in slot 14, slot 12, and slot 10; the TDRA set of PDSCH reception opportunities in a slot is: SLIV=4, and SLIV=11.

In this example, the network device can configure a set of first spacings for calculating the PDSCH reception opportunities of a specific cell through high-level signaling, and then calculate the valid SLIV set for each corresponding element in the set to calculate the number of PDSCH reception opportunities in a slot; the network device can also configure a set of first spacings for calculating the PDSCH reception opportunities of a specific cell through high-level signaling, and configure the valid SLIV set for each corresponding element in the set to calculate the number of PDSCH reception opportunities in a slot.

It should also be noted that, the network device can configure the sub-carrier space (SCS) of the cell, such as 15KHz/30KHz/60KHz/120KHz, and 480KHz/960KHz. For ease of expression, different SCSs can also be represented by parameters $\mu$ = 0, 1, 2, 3, 5, 6. The relationship between the SCS and parameter $\mu$ is: SCS = $2^{\mu}$ * 15KHz.

In the above implementation, the SCS values of the default cell are the same, and each SCS includes:

μ PUCCH, representing the SCS of the uplink cell that transmits the PUCCH (i.e., $2^{\mu\,PUCCH}$ *15KHz);

μPDCCH, indicating the SCS of the downlink cell of the PDCCH that transmits scheduling signaling (the DCI that schedules the PDSCHs of the multiple cells) (i.e.: $2^{\mu PDCCH}$ * 15KHz);

μPDSCH1, representing the SCS of the downlink cell (first cell) used to calculate the k1 timing (i.e., $2^{\mu PDSCH1}$ * 15KHz); the cell may also transmit the PDSCH at the same time; for example, when calculating the second set of cell c, μPDSCH1 represents the SCS of cell c;

μPDSCH2, representing the SCS of the downlink cell transmitting the PDSCH (i.e., $2^{\mu PDSCH2}$ *15KHz).

However, in the actual cell configuration and data transmission process, the SCSs of the above four cells may be different, which requires some processing according to the different SCS situations.

Optionally, in this embodiment, determining, according to the obtained second spacing, the adjustment parameter corresponding to each row index of the first cell in the TDRA table includes:

determining the adjustment parameter according to at least one of the SCS of the uplink cell transmitting the PUCCH, the SCS of the downlink cell transmitting the PDCCH of the DCI, the SCS of the first cell and the SCS of the downlink cell transmitting the PDSCH.

The following describes the processing method when the above cells have different SCSs.

Case 1: μPUCCH=$\mu_{UL}$, μPDCCH=μPDSCH1=μPDSCH2=$\mu_{DL}$;

where $\mu_{UL}$ represents the SCS of the uplink cell, and $\mu_{DL}$ represents the SCS of the downlink scheduled cell. In case 1, it is necessary to correct the adjustment parameter corresponding to the row index of the cell in the process of calculating the second set of cells, and then determine the adjusted first set. Specifically, for the row index r of cell c, the corrected adjustment parameter = $\Delta K_{0,r,c} \cdot 2^{\mu_{UL}-\mu_{DL}}$. If the corrected adjustment parameter is an integer, the adjusted first set can be determined in the above manner, but the corrected adjustment parameter may be a non-integer. For the case where the corrected adjustment parameter is not an integer, according to $\left\lceil \Delta K_{0,r,c} \cdot 2^{\mu_{UL}-\mu_{DL}} \right\rceil$, that is, rounding up the corrected adjustment parameter to obtain the first value, adding the elements of the first set to the first value to obtain a set A, and according to $\left\lfloor \Delta K_{0,r,c} \cdot 2^{\mu_{UL}-\mu_{DL}} \right\rfloor$, that is, rounding down the corrected adjustment parameter to obtain the second value, adding the elements of the first set to the second value to obtain a set B; finally, it takes the union of the set A and the set B as the adjusted first set corresponding to cell c at row index r. The $2^{\mu_{UL}-\mu_{DL}}$ represents the number of downlink slots included in the duration of one uplink slot, which is as follows.

Example 1: $\mu_{UL}$ = 2, $\mu_{DL}$ =0, that is, uplink SCS=60KHz, downlink SCS=15KHz; then 1 uplink slot includes 4 downlink slots; at this time: the value of $\Delta K_{0,r,c}$ needs to be multiplied by an integer (the multiplication factor is: the number of downlink slots of the scheduling cell included in 1 uplink slot);

Example 2: $\mu_{UL}$ = 0, $\mu_{DL}$ =2, that is, uplink SCS=15KHz, downlink SCS=16KHz; then 1 uplink slot includes 1/4 downlink slot; at this time: the value of $\Delta K_{0,r,c}$ needs to be multiplied by a fraction (the multiplication factor is: 1 uplink slot includes the number of downlink slots of the scheduling cell). When the fractional multiplication has a decimal part, it is necessary to performing operation of rounding up and rounding down, and making a union, so as to meet the goal of flexible scheduling of the base station.

Case 2: μPUCCH=$\mu_{UL}$, (μPDSCH1=μ1)<(μPDSCH2=μ2);

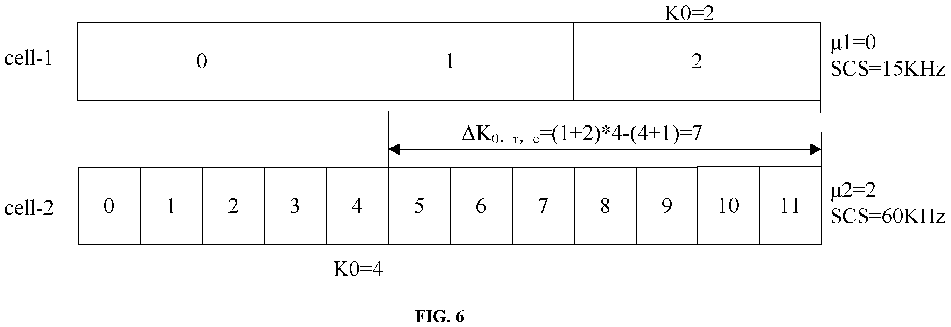

In case 2, it is necessary to recalculate the adjustment parameter corresponding to the row index of the cell in the process of the second set of cells, and then determine the adjusted first set. Specifically, for the row index r of cell c, let $max(K_{0,r,1}, ..., K_{0,r,n}, ..., K_{0,r,N}) = K_{01,r,c}$, $K_{0,r,c} = K_{02,r,c}$, and it calculates the adjustment parameter $\Delta K_{0,r,c}$ corresponding to the row index r of cell c according to $\Delta K_{0,r,c} = (K_{01,r,c} + 1) * 2^{\mu2-\mu1} - (K_{02,r,c} + 1)$, where $2^{\mu_{UL}-\mu_{DL}}$ represents the number of slots of the cell that includes the calculation of k1 timing in a slot of cell c (the current scheduled cell). For example, as shown in FIG. 6, for calculating the K0 difference between cell-1 and cell-2, due to the different SCSs of different cells, it is necessary to make correction on the calculated difference. K0 of cell-1=2, K0 of cell-2=4, then it calculates the difference result of 7 according to $\Delta K_{0,r,c} = (K_{01,r,c} + 1) * 2^{\mu2-\mu1} - (K_{02,r,c} + 1) = (1+2) * 4 - (4+1) = 7$, which is in line with the actual situation.

Case 3: μPUCCH=$\mu_{UL}$, (μPDSCH1 =μ1)>(μPDSCH2=μ2);

In case 3, it is necessary to recalculate the adjustment parameter corresponding to the row index of the cell in the process of the second set of cells, and then determine the adjusted first set. Specifically, for the row index r of cell c, let $max(K_{0,r,1}, ..., K_{0,r,n}, ..., K_{0,r,N}) = K_{01,r,c}$, $K_{0,r,c} = K_{02,r,c}$, by

$$\Delta K_{0,r,c} = \left\lfloor K_{01,r,c} \right. *$$

$$2^{\mu 2 - \mu 1} \rfloor - K_{02,r,c} \, ,$$

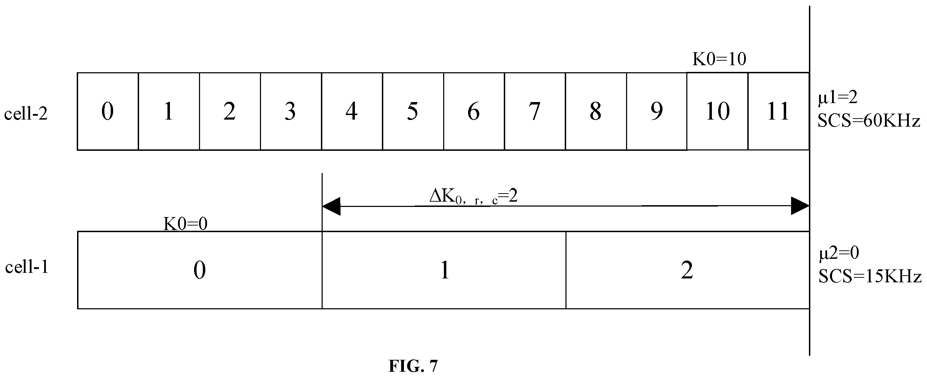

it calculates the adjustment parameter corresponding to the row index r of cell c $\Delta K_{0,r,c}$, where $2^{\mu UL-\mu DL}$ represents the number of slots of the cell that includes the calculation of k1 timing in a slot of cell c (currently scheduled cell). At this time, because $\mu 1 > \mu 2$ multiplication factor, a decimal (non-integer) will appear, and it is necessary to round down. For example, as shown in FIG. 7, for calculating the difference in K0 between cell-1 and cell-2, due to the different SCSs of different cells, it is necessary to make corrections in the calculated difference. K0=10 for cell-1, K0=0 for cell-2, then it calculates a difference result of 2 according to $\Delta K_{0,r,c} = \lfloor K_{01,r,c} * 2^{\mu 2 - \mu 1} \rfloor - K_{02,r,c} = \lfloor 10/4 \rfloor - 0 = 2$, which is in line with the actual situation.

Case 4: $\mu PUCCH = \mu_0$;
The PDCCH transmitting the scheduling signaling channel is different from the SCS of the scheduled cell. When the terminal calculates the K0 position, it needs to compensate according to the difference in SCSs. For example, the new

second spacing $= \lfloor m * \frac{2^{\mu PDSCH}}{2^{\mu PDCCH}} \rfloor + K_0$, m is the slot number where the DCI (scheduling signaling) is sent. For one DCI scheduling PDSCHs on the multiple cells, when the SCSs of multiple scheduled cells are different, the above determination of the difference in the slots where the PDSCHs of different cells are located in the actual scheduling process according to $\Delta K_{0,r,c} = max(K_{0,r,1}, ..., K_{0,r,n}, ..., K_{0,r,N}) - K_{0,r,c}$ will be inaccurate; therefore, it is necessary to recalculate the adjustment parameter corresponding to the row index of the cell in the process of the second set of cells, and then determine the adjusted first set, including the followings.

Method 1: constraining the value of $\mu PDCCH$, so that its SCS is not greater than (less than or equal to) the SCS of the scheduled cell. That is, $\mu PDCCH$ is less than or equal to $\mu PDSCH$, and $\mu PDSCH$ represents the SCS of the scheduled cell.

At this time, $2^{\mu PDSCH}$ is an integer multiple of $2^{\mu PDCCH}$, that is, the result of $\frac{2^{\mu PDSCH}}{2^{\mu PDCCH}}$ is an integer.

Taking the above case 2 ($\mu PDSCH1 = \mu 1$)<($\mu PDSCH2 = \mu 2$) as an example, substituting the new second spacing into the equation $\Delta K_{0,r,c} = (K_{01,r,c} + 1) * 2^{\mu 2 - \mu 1} - (K_{02,r,c} + 1)$ we can obtain:

$$\Delta K_{0,r,c} = \left( \lfloor m * \frac{2^{\mu 1}}{2^{\mu PDCCH}} \rfloor + K_{01,r,c} + 1 \right) *$$

$$2^{\mu 2 - \mu 1} - \left( \lfloor m * \frac{2^{\mu 2}}{2^{\mu PDCCH}} \rfloor + K_{02,r,c} + 1 \right) = \left( m * \frac{2^{\mu 1}}{2^{\mu PDCCH}} + K_{01,r,c} + 1 \right) * 2^{\mu 2 - \mu 1} -$$

$$(m * \frac{2^{\mu 2}}{2^{\mu PDCCH}} + K_{02,r,c} + 1) = (K_{01,r,c} + 1) * 2^{\mu 2 - \mu 1} - (K_{02,r,c} + 1)$$, that is, the influence of $\mu PDCCH$ on the calculation $\Delta K_{0,r,c}$ is eliminated.

Taking the above case 3 ($\mu PDSCH1 = \mu 1$)>($\mu PDSCH2 = \mu 2$) as an example, substituting the new second spacing

into the calculation $\Delta K_{0,r,c} = \lfloor K_{01,r,c} * 2^{\mu 2 - \mu 1} \rfloor - K_{02,r,c}$, we can obtain:

$$\Delta K_{0,r,c} = \lfloor \left( m * \frac{2^{\mu 1}}{2^{\mu PDCCH}} + K_{01,r,c} \right) * 2^{\mu 2 - \mu 1} \rfloor - \left( m * \right.$$

$$\left. \frac{2^{\mu 2}}{2^{\mu PDCCH}} + K_{02,r,c} \right) = \lfloor (m * \frac{2^{\mu 2}}{2^{\mu PDCCH}} + K_{01,r,c} * 2^{\mu 2 - \mu 1}) * 2^{\mu 2 - \mu 1} \rfloor - \left( m * \right.$$

$$\left. \frac{2^{\mu 2}}{2^{\mu PDCCH}} + K_{02,r,c} \right) = \lfloor K_{01,r,c} * 2^{\mu 2 - \mu 1} \rfloor - K_{02,r,c}$$, that is, the influence of $\mu PDCCH$ on the calculation $\Delta K_{0,r,c}$ is eliminated.

Method 2: calculating multiple SCSs based on different combinations of $\Delta K_{0,r,c}$;

In this method, it traverses the SCS of the cell that may send the scheduling signaling; and traverses the m value from 0 to $2^{\mu PDCCH} - 1$; and then calculates multiple possible $\Delta K_{0,r,c}$;
Taking the above case 2 ($\mu PDSCH1 = \mu 1$)<($\mu PDSCH2 = \mu 2$) as an example, the incremental change of $\Delta K_{0,r,c}$ i.e., $\Delta K_{PDCCH}$ is:

$$\Delta K_{PDCCH=} \quad (\left\lfloor m * \frac{2^{\mu 1}}{2^{\mu PDCCH}}\right\rfloor_{,,}) * 2^{\mu 2 - \mu 1} - \left\lfloor m * \frac{2^{\mu 2}}{2^{\mu PDCCH}}\right\rfloor.$$

where $\Delta K_{PDCCH}$ indicates different incremental possibilities of $\Delta K_{0,r,c}$.

Traversing the SCSs of the cells that may send scheduling signaling; traversing the m value from 0 to $2^{\mu PDCCH}$ - 1; then calculating multiple possible $\Delta K_{0,r,c}$, that is,

$$\Delta K_{0,r,c} = \left\lfloor K_{01,r,c} * 2^{\mu 2 - \mu 1}\right\rfloor - K_{02,r,c} + \Delta K_{PDCCH}.$$

Assuming $\mu 1=1$, $\mu 2=2$, $\mu PDCCH=3$, $\mu PDCCH=2$, $K_{01,r,c}=5$, $K_{02,r,c}=1$, then the $\Delta K_{PDCCH}$ can be obtained, as shown in the following Table 19 ($\mu PDCCH=3$).

Table 19

| Value m | $\left\lfloor m * \frac{2^{\mu 1}}{2^{\mu PDCCH}}\right\rfloor * 2^{\mu 2 - \mu 1}$ | $\left\lfloor m * \frac{2^{\mu 2}}{2^{\mu PDCCH}}\right\rfloor$ | $\Delta K_{PDCCH}$ |
|---|---|---|---|
| 0 | 0 | 0 | 0 |
| 1 | 0 | 0 | 0 |
| 2 | 0 | 1 | -1 |
| 3 | 0 | 1 | -1 |
| 4 | 2 | 2 | 0 |
| 5 | 2 | 2 | 0 |
| 6 | 2 | 3 | -1 |
| 7 | 2 | 3 | -1 |

It can be seen from Table 19 that $\Delta K_{PDCCH=3} = \{0, -1\}$.
The $\Delta K_{PDCCH}$ can also be obtained, as shown in the following table 20 ($\mu PDCCH=2$).

Table 20

| Value m | $\left\lfloor m * \frac{2^{\mu 1}}{2^{\mu PDCCH}}\right\rfloor * 2^{\mu 2 - \mu 1}$ | $\left\lfloor m * \frac{2^{\mu 2}}{2^{\mu PDCCH}}\right\rfloor$ | $\Delta K_{PDCCH}$ |
|---|---|---|---|
| 0 | 0 | 0 | 0 |
| 1 | 0 | 0 | 0 |
| 2 | 2 | 1 | -1 |
| 3 | 2 | 1 | -1 |

This can be seen from Table 20 that $\Delta K_{PDCCH=2} = \{0, -1\}$.
Then, after traversing, $\Delta K_{PDCCH=2, 3} = \{0, -1\}$.

It can be calculated that: $\left\lfloor K_{01,r,c} * 2^{\mu 2 - \mu 1}\right\rfloor - K_{02,r,c} + =5*2-1=9$ , and

$\Delta K_{0,r,c} = \left\lfloor K_{01,r,c} * 2^{\mu 2 - \mu 1}\right\rfloor - K_{02,r,c} + \Delta K_{PDCCH}= \{8,9\}$ . Thus, {8,9} is substituted for {9} to determine the second set.

Taking the above case 3 ($\mu PDSCH1 = \mu 1) > (\mu PDSCH2 = \mu 2$) as an example, the incremental change of $\Delta K_{0,r,c}$, i.e., $\Delta K_{PDCCH}$, is:

$$\Delta K_{PDCCH=} \left\lfloor \left( \left\lfloor m * \frac{2^{\mu 1}}{2^{\mu PDCCH}} \right\rfloor_{,,} \right) * 2^{\mu 2 - \mu 1} \right\rfloor - \left\lfloor m * \frac{2^{\mu 2}}{2^{\mu PDCCH}} \right\rfloor$$

Traversing the SCSs of the cells that may send scheduling signaling; traversing the m value from 0 to $2^{\mu PDCCH} - 1$; then calculating multiple possible $\Delta K_{0,r,c}$, that is,

$$\Delta K_{0,r,c} = \left\lfloor K_{01,r,c} * 2^{\mu 2 - \mu 1} \right\rfloor - K_{02,r,c} + \Delta K_{PDCCH}.$$

Assuming $\mu 1 = 2$, $\mu 2 = 1$, $\mu PDCCH = 3$, $\mu PDCCH = 2$, $K_{01,r,c} = 5$, $K_{02,r,c} = 1$, then $\Delta K_{PDCCH}$ can be obtained, as shown in the following Table 21 ($\mu PDCCH = 3$).

Table 21

| Value m | $\left\lfloor \left( \left\lfloor m * \frac{2^{\mu 1}}{2^{\mu PDCCH}} \right\rfloor_{,,} \right) * 2^{\mu 2 - \mu 1} \right\rfloor$ | $\left\lfloor m * \frac{2^{\mu 2}}{2^{\mu PDCCH}} \right\rfloor$ | $\Delta K_{PDCCH}$ |
|---|---|---|---|
| 0 | 0 | 0 | 0 |
| 1 | 0 | 0 | 0 |
| 2 | 0 | 0 | 0 |
| 3 | 0 | 0 | 0 |
| 4 | 1 | 1 | 0 |
| 5 | 1 | 1 | 0 |
| 6 | 1 | 1 | 0 |
| 7 | 1 | 1 | 0 |

As can be seen from Table 21, $\Delta K_{PDCCH=3} = \{0\}$.
$\Delta K_{PDCCH}$ can also be obtained, as shown in the following table 22 ($\mu PDCCH = 2$).

Table 22

| Value m | $\left\lfloor \left( \left\lfloor m * \frac{2^{\mu 1}}{2^{\mu PDCCH}} \right\rfloor_{,,} \right) * 2^{\mu 2 - \mu 1} \right\rfloor$ | $\left\lfloor m * \frac{2^{\mu 2}}{2^{\mu PDCCH}} \right\rfloor$ | $\Delta K_{PDCCH}$ |
|---|---|---|---|
| 0 | 0 | 0 | 0 |
| 1 | 0 | 0 | 0 |
| 2 | 1 | 1 | 0 |
| 3 | 1 | 1 | 0 |

As can be seen from Table 22, $\Delta K_{PDCCH=2} = \{0\}$.
Then, after traversing,

$$\Delta K_{PDCCH=2,\ 3} = \{0\}.$$

It can calculate: $\left\lfloor K_{01,r,c} * 2^{\mu 2 - \mu 1} \right\rfloor - K_{02,r,c} +=2-1=1$ , and

$$\Delta K_{0,r,c} = \lfloor K_{01,r,c} \ *$$

$$2^{\mu 2 - \mu 1} \rfloor - K_{02,r,c} + \Delta K_{PDCCH} = \{1\}.$$

Thus, $\Delta K_{0,r,c} = \{1\}$ is used to determine the second set.

In summary, the method of the embodiment of the present application provides a method for calculating the reception occasion of the PDSCH by static HARQ-ACK feedback in a multi-cell scheduling scenario, so that the feedback mechanism based on the static HARQ-ACK codebook is effectively executed.

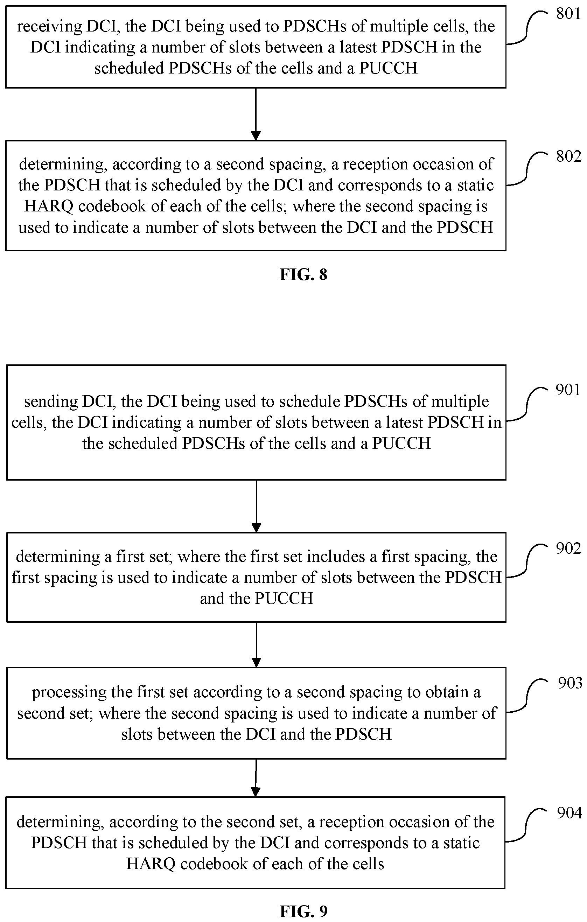

As shown in FIG. 8, a HARQ feedback method according to an embodiment of the present application is performed by a terminal, including:

step 801, receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);

determining, according to a second spacing, a reception occasion of the PDSCH that is scheduled by the DCI and corresponds to a static HARQ codebook of each of the cells, where the second spacing is used to indicate the number of slots between the DCI and the PDSCH.

Through the above steps 801-802, after receiving the DCI, the terminal can use the second spacing to determine the reception occasion of the PDSCH that corresponds to the static HARQ codebook of each cell and scheduled by the DCI, thereby realizing the HARQ feedback when one DCI schedules PDSCHs on the multiple cells.

Optionally, the second spacing is recorded in a TDRA table, and the second spacings corresponding to the multiple cells under each row index of the TDRA table are the same.

That is, the terminal determines that the second spacing used by the PDSCH reception opportunities corresponding to the static HARQ codebooks of the multiple cells is the second spacing in the TDRA table, and the second spacings corresponding to the multiple cells under each row index of the TDRA table are the same. For example, the TDRA table is shown in Table 23 below.

Table 23

| Row Index | Cell-1 | Cell-2 | Cell-3 | Cell-4 |
|---|---|---|---|---|
| 0 | K0=2; SLIV=1 | K0=2; SLIV=2 | K0=2; SLIV=3 | K0=2; SLIV=4 |
| 1 | K0=1; SLIV=5 | K0=1; SLIV=6 | K0=1; SLIV=7 | K0=1; SLIV=7 |
| 2 | K0=3; SLIV=5 | K0=3; SLIV=6 | NULL | K0=3; SLIV=7 |

In Table 23, for row index 0, K0 of the four configured cells is 2; for row index 1, K0 of the four configured cells is 1; for row index 2, K0 of the three configured cells is 3; NULL in cell-3 indicates that it is not scheduled.

It should be noted that the method of using the second spacing in the TDRA table (the second spacing corresponding to the multiple cells under each row index of the TDRA table being the same) to determine the reception occasion of the PDSCH corresponding to the static HARQ codebook of the multiple cells is applicable to the scenario where the TDRA table is configured separately when multiple cells schedule PDSCHs, and the relevant scheduling time domain information for each cell (including: number of row indices, SLIV content, K0 content) may be different from the content of the TDRA table configured for single-cell scheduling.

The TDRA table may be actively sent by the network device, or the terminal reports information indicating that it wants the network device to configure the TDRA table, and the second spacings corresponding to the multiple cells under each row index of the TDRA table are the same.

Optionally, the second spacing is a specific second spacing recorded in the TDRA table, or a second spacing of a specific cell.

Here, the specific second spacing may be a default second spacing, and the second spacing of the specific cell may be the second spacing of the default cell.

For example, the TDRA table is shown in Table 24 below.

Table 24

| Row index | Cell-1 | Cell-2 | Cell-3 | Cell-4 |
|---|---|---|---|---|
| 0 | K0=2; SLIV=1 | K0=3; SLIV=2 | K0=4; SLIV=3 | K0=2; SLIV=4 |
| 1 | K0=1; SLIV=5 | K0=0; SLIV=6 | K0=4; SLIV=3 | K0=4; SLIV=7 |
| 2 | NULL | K0=3; SLIV=6 | NULL | K0=5; SLIV=7 |

Assuming that the default cell is the first scheduled PDSCH cell, if the second spacing of the first scheduled PDSCH cell is used, then in Table 24:

for Row index 0, the PDSCHs of 4 cells are scheduled, where cell-1 is the cell with the smallest ID value of the scheduled cells, that is, the first scheduled PDSCH cell, then the K0 of the time domain information corresponding to each of cell-2, cell-3, and cell-4 is the same as the K0 of cell-1, that is, the K0 of all scheduled cells is 2;

for row index 1, the PDSCHs of 4 cells are scheduled, where cell-1 is the cell with the smallest ID value of the scheduled cells, that is, the first scheduled PDSCH cell, then the K0 of the time domain information corresponding to each of cell-2, cell-3, and cell-4 is the same as the K0 of cell-1, that is, the K0 of all scheduled cells is 1;

for row index 2, the PDSCHs of 2 cells are scheduled, where cell-2 is the cell with the smallest ID value of the scheduled cells, that is, the first scheduled PDSCH cell, then the K0 of the time domain information corresponding to cell-4 remains the same as the K0 of cell-2, that is, the K0 of the two scheduled cells is 3.

It should be noted that, the method of using the specific second spacing recorded in the TDRA table, or the second spacing of a specific cell, to determine the reception occasion of the PDSCH corresponding to the static HARQ codebooks of the multiple cells is applicable to the scenario where multiple cells schedule the PDSCHs and do not need to configure the TDRA table separately.

It should also be noted that, when the K0 indicated in each row in the TDRA table is different, a default value may also be taken, such as: the minimum K0 or maximum K0 in the scheduling cell, the K0 corresponding to the last scheduled cell (the maximum value of the cell ID), or the K0 corresponding to the first scheduled cell (the minimum value of the cell ID). The present application is not limited thereto.

In addition, the K0 value here can be the slot spacing between the received scheduling signaling (such as DCI) and the starting position of the received PDSCH (that is, the known definition of K0), or it can be the slot spacing between the received scheduling signaling and the ending position of the received PDSCH, that is, when the base station indicates or configures repeated transmission, the terminal can use the number of slot spacings from the received scheduling signaling (such as DCI) to the last one of the PDSCH transmissions (if repeated transmission is configured, the last one refers to the last transmission of the repeated transmission) as K0 (that is, $K_0 = K_0$ + repetitionNum - 1).

It should be noted that, the second spacings corresponding to the multiple cells under each row index of the TDRA table are the same. The purpose thereof is to ensure that the slots of the end positions of the PDSCHs of the multiple scheduled cells are the same (if repeated transmission is configured, the slot positions of the last PDSCH transmission of each of all scheduled cells is the same), thereby preventing the expansion of the K1 sequence value and reducing the complexity of the protocol and the terminal implementation.

In an embodiment of the present application, in order to ensure that the slot position of the last PDSCH transmission of each of all scheduled cells is the same, when the scheduled cell supports the repeated transmission, the number of repetitions or K0 determined by each cell needs to be adjusted.

The following describes in detail how to adjust the number of repetitions or K0 determined by each cell.

A: adjusting the number of repetitions, repetitionNum, of each scheduled cell, so that the number of repetitions of each scheduled cell after adjustment is the same. The specific methods used include but are not limited to the following.

Method 1: if the scheduled cell is configured with repeated transmission, that is, the number of transmissions repetitionNum > 1, when the scheduling signaling is multi-cell scheduling, the terminal determines the number of transmissions repetitionNum = 1 indicated by the base station.

Specifically, the terminal determines that the configuration/indication of the number of repeated transmissions is invalid, or the default number of transmissions is 1. (It should be noted that the configuration or indication of the number of transmissions greater than 1 is only effective in single carrier scheduling).

Method 2: when the scheduling signaling of the base station is multi-cell scheduling, the base station configures the number of repeated transmissions individually, and the value of the number of repeated transmissions applies to all scheduled cells.

Method 3: the number of repeated transmissions for all scheduled cells is determined according to the indication or configuration parameter of the specific scheduled cell, for example, it is agreed that the specific cell can be the cell with the smallest cell number or the largest cell number among the scheduled cells; or the cell with the smallest number of repeated transmissions or the largest number of repeated transmissions. The present application is not limited thereto.

B: determining K0 of each scheduled cell, so that K0 of the scheduled cell is the same as K0 of the determined reference cell. The method includes but is not limited to the following.

First, a reference cell and K0 of the reference cell are determined.

Specifically, it is assumed that the number of repeated transmissions of the reference cell is ref_N (where N is greater than or equal to 1, and when N is equal to 1, it indicates only one transmission); K0 of the reference cell is ref_K0 (K0 is greater than or equal to 0).

Secondly, for each scheduled cell (assuming it is X), the base station schedules or indicates the number of repeated transmissions x_N (where x_N is greater than or equal to 1, and if the value is 1, it means only one transmission), then the slot spacing between the DCI signaling and PDSCH data transmission position of the scheduled cell is determined to be x_k0, which specifically includes the following two cases.

Case 1: determining that the slot spacing between the received DCI signaling of the scheduled cell and the transmission position where the PDSCH data is received for the first time is x_k0. If the scheduled cell is X, then x_k0 = ref_K0 + ref_N - x_N.

That is, the first transmission for the scheduled PDSCH data is in the slot ref_K0 + ref_N - x_N, and the last transmission for the scheduled PDSCH data is in ref_K0 + ref_N - 1.

Case 2: determining that the slot spacing between the received DCI signaling of the scheduled cell and the transmission position where the PDSCH data is received for the last time is x_k0. If the scheduled cell is X, then x_k0 = ref_K0 - x_N +1.

That is, the first transmission for the scheduled PDSCH data is in the slot ref_K0 - x_N +1, and the last transmission for the scheduled PDSCH data is in ref_K0.

The "first time the PDSCH data is received" and "the last time the PDSCH data is received" recited here may be understood as the first time and the last time of repeated transmissions.

In addition, whether the terminal executes the method flow shown in FIG. 1 or the method flow shown in FIG. 8 may be instructed by the network device.

An shown in FIG. 9, an embodiment of the present application further provides a HARQ feedback method, which is performed by a network device and includes:

> step 901, sending DCI, where the DCI schedules PDSCHs of multiple cells, and the DCI indicates the number of slots between the latest scheduled PDSCH in the PDSCHs of the scheduled cells and the PUCCH;
> step 902, determining a first set, where the first set includes a first spacing, and the first spacing is used to indicate the number of slots between the PDSCH and the PUCCH;
> step 903: processing the first set according to a second spacing to obtain a second set, where the second spacing is used to indicate the number of slots between the DCI and the PDSCH;
> step 904: determining reception occasion of the PDSCH of the terminal corresponding to the static HARQ codebook of each cell scheduled by the DCI according to the second set.

Through the above step 901, the network device can send a DCI that schedules the PDSCHs of multiple cells to the terminal, so that after receiving the DCI, the terminal may, for the case where the DCI schedules the PDSCHs of multiple cells, uses the second spacing to expand the first set to obtain the second set, and then uses the second set to determine the reception occasion of the PDSCH that corresponds to the static HARQ codebook of each cell and scheduled by the DCI, thereby realizing the HARQ feedback in the case where one DCI schedules the PDSCHs on the multiple cells. It should be noted that, when the network device executes steps 902-904, it will also determine the first set for the case where the DCI schedules the PDSCHs of multiple cells, and use the second spacing to expand the first set to obtain the second set, and then use the second set to determine the reception occasion of the PDSCH of the terminal corresponding to the static HARQ codebook of each cell scheduled by the DCI, to complete the corresponding PDSCH transmission.

The embodiment of the present application further provides a HARQ feedback method, which is performed by a network device and includes:

> sending DCI, the DCI scheduling PDSCHs of multiple cells, the DCI indicating the number of slots between the latest PDSCH in the scheduled PDSCHs of the cells and the PUCCH;
> determining, according to the second set, a reception occasion of the PDSCH of the terminal corresponding to the static HARQ codebook of each cell scheduled by the DCI;
> the second set is obtained according to the first set and the second spacing, the first set includes the first spacing, the first spacing is used to indicate the number of slots between the PDSCH and the PUCCH, and the second spacing is used to indicate the number of slots between the DCI and the PDSCH.

Optionally, the second set is obtained according to the first set and the second spacing, including:

obtaining the second spacing corresponding to each cell in the time domain resource allocation (TDRA) table;
for each first cell of the multiple cells, respectively perform:

determining, according to the obtained second spacing, an adjustment parameter corresponding to each row index of the first cell in the TDRA table;
based on the row indexes of different rows of the first cell in the TDRA table, following spacing processing operations are performed respectively:

determining, according to the adjustment parameter of the $(i+1)^{th}$ row index, an adjusted first set corresponding to the $(i+1)^{th}$ row index, where i is an integer greater than or equal to 1, and i is an integer greater than or equal to 1;
determining a $(i+1)^{th}$ spacing processing result of the $(i+1)^{th}$ row index according to the adjusted first set and the determined $i^{th}$ spacing processing result of the $i^{th}$ row index, and then proceeding to execute the spacing processing operation corresponding to the $(i+2)^{th}$ row index;
after obtaining the spacing processing result corresponding to the last row index of the first cell in the TDRA table, the spacing processing result corresponding to the last row index is determined as the second set of the first cell.

Optionally, the $i^{th}$ spacing processing result of the $i^{th}$ row index is determined in the following manner:

when i=1, determining an adjusted first set corresponding to the first row index according to the adjustment parameter of the first row index corresponding to the first cell;
according to the adjusted first set of the first row index, the first spacing processing result of the first row index is obtained; or according to the first set and the adjusted first set corresponding to the first row index, the first spacing processing result of the first row index is obtained.

Optionally, determining, according to the obtained second spacing, an adjustment parameter corresponding to each row index of the first cell in the TDRA table includes:
for one of the row indexes of the first cell in the TDRA table, an adjustment parameter of the row index in the first cell is determined based on a second spacing corresponding to the row index in the first cell and a maximum second spacing corresponding to the row index in the multiple cells.
Optionally, the determining, based on the second spacing corresponding to the row index in the first cell and the maximum second spacing corresponding to the row index in the multiple cells, an adjustment parameter of the row index in the first cell includes:

calculating the adjustment parameter of the first cell corresponding to the row index r $\Delta K_{0,r,c}$ through a formula $\Delta K_{0,r,c} = max(K_{0,r,1}, ..., K_{0,r,n}, ..., K_{0,r,N}) - K_{0,r,c}$;
where $K_{0,r,n}$ represents the second spacing corresponding to the row index r of cell n in the multiple cells, N represents a number of the cells, and $K_{0,r,c}$ represents the second spacing corresponding to the row index r in the first cell c.

Optionally, the determining the adjusted first set corresponding to the $(i+1)^{th}$ row index according to the adjustment parameter of the $(i+1)^{th}$ row index, where i is an integer greater than or equal to 1, includes:

for each element in the first set, the respective adjustment parameter of the $(i+1)^{th}$ row index is added to obtain the adjusted first set of the $(i+1)^{th}$ row index;
the determining the $(i+1)^{th}$ spacing processing result of the $(i+1)^{th}$ row index according to the adjusted first set and the determined $i^{th}$ spacing processing result of the $i^{th}$ row index includes:
the adjusted first set and the $i^{th}$ spacing processing result corresponding to the $i^{th}$ row index of the first cell are joined to obtain a union result, which is used as the $(i+1)^{th}$ spacing processing result corresponding to the $(i+1)^{th}$ row index of the first cell.

Optionally, the method further includes:
determining, according to the TDRA table and the second set of the first cell, a valid start and length indicator value (SLIV) corresponding to each first spacing in the second set.
Optionally, the determining, according to the TDRA table and the second set of the first cell, a valid start and length indicator value (SLIV) corresponding to each first spacing in the second set includes:

based on the TDRA table and the second set of the first cell, deleting redundant SLIVs in all SLIVs corresponding to the first spacing; or

based on the TDRA table and the second set of the first cell, selecting the SLIV corresponding to the feedback of HARQ-ACK information on the PUCCH indicated by the first spacing as the valid SLIV.

Optionally, the obtaining the second spacing corresponding to each cell in the time domain resource allocation (TDRA) table includes:

for each cell, execute:

obtaining a second spacing corresponding to a first cell and a number of repeated transmissions of the first cell in the TDRA table;

updating a second spacing corresponding to the first cell according to the number of repeated transmissions.

Optionally, the updating the second spacing corresponding to the first cell according to the number of repeated transmissions includes:

calculating the updated second spacing $K'_0$ according to the equation $K'_0 = K_0 + \text{repetitionNum} - 1$;

where $K_0$ represents the second spacing before updating, and repetitionNum represents the number of repeated transmissions.

Optionally, after determining, according to the second set, the reception occasion of the PDSCH of the terminal corresponding to the static HARQ codebooks of the multiple cells, the method further includes:

in the case that the HARQ-ACK feedback bundling is configured, the HARQ-ACK information is determined according to the PDSCH with the latest PDSCH reception occasion among the multiple cells.

It should be noted that this method is implemented in conjunction with the method of the terminal side as shown in FIG. 1. The implementation of the above method embodiment is applicable to this method and can achieve the same technical effect.

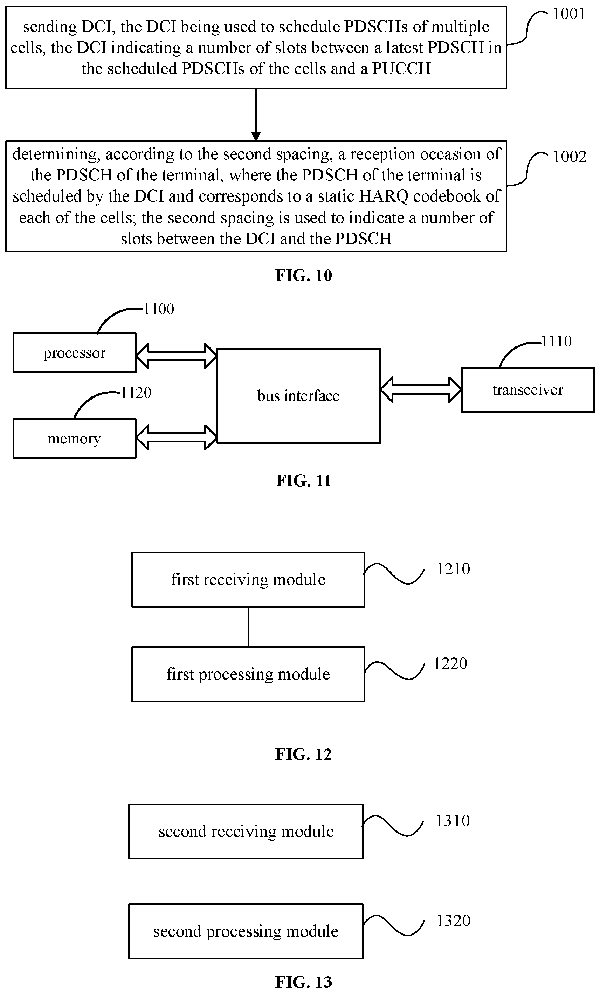

As shown in FIG. 10, a HARQ feedback method according to an embodiment of the present application is performed by a network device, including:

step 1001, sending DCI, where the DCI schedules PDSCHs of multiple cells, and the DCI indicates the number of slots between the latest scheduled PDSCH and the PUCCH in the scheduled PDSCHs of the cells;

step 1002, determining the reception occasion of the PDSCH of the terminal corresponding to the static HARQ codebook of each cell scheduled by the DCI according to a second spacing, where the second spacing is used to indicate the number of slots between the DCI and the PDSCH.

Through the above step 1001, the network device can send the DCI that schedules the PDSCHs of multiple cells to the terminal, so that after receiving the DCI, the terminal can, according to the situation that the DCI schedules the PDSCHs of multiple cells, use the second spacing to determine the reception occasion of the PDSCH that corresponds to the static HARQ codebook of each cell and scheduled by the DCI, thereby realizing the HARQ feedback in the case where one DCI schedules the PDSCHs on the multiple cells. It should be noted that, when the network device executes step 1002, it will also use the second spacing to determine the reception occasion of the PDSCH of the terminal corresponding to the static HARQ codebook of each cell scheduled by the DCI according to the situation that the DCI schedules the PDSCHs of multiple cells, to complete the corresponding PDSCH transmission.

The embodiment of the present application further provides a HARQ feedback method, which is performed by a network device, including:

sending DCI, the DCI scheduling PDSCHs of multiple cells, the DCI indicating the number of slots between the latest PDSCH in the scheduled PDSCHs of the cells and the PUCCH;

determining, according to a second spacing, a reception occasion of the PDSCH of the terminal that is scheduled by the DCI and corresponds to a static HARQ codebook of each of the cells, where the second spacing is used to indicate the number of slots between the DCI and the PDSCH.

Optionally, the second spacing is recorded in the TDRA table, and the second spacings corresponding to the multiple cells under each row index of the TDRA are the same.

Optionally, the second spacing is a specific second spacing recorded in the TDRA table, or a second spacing of a specific cell.

It should be noted that this method is implemented in conjunction with the method of the terminal side shown in FIG. 8. The implementation of the above method embodiment is applicable to this method and can achieve the same technical effect.

As shown in FIG. 11, the embodiment of the present application further provides a HARQ feedback device, including: a memory 1120, a transceiver 1110, and a processor 1100: the memory 1120 is configured to store program instructions; the transceiver 1110 is configured to send and receive data under the control of the processor 1100; the processor 1100 is configured to read the program instructions in the memory 1120;
the transceiver 1110 is configured to perform the following operations:

receiving downlink control information (DCI), where the DCI schedules physical downlink shared channels (PDSCHs) of multiple cells, and the DCI indicates the number of slots between the latest scheduled PDSCH in the PDSCHs of the scheduled cells and the physical uplink control channel (PUCCH);
the processor 1100 is configured to perform the following operations:

determining a first set; where the first set includes a first spacing, and the first spacing is used to indicate the number of slots between the PDSCH and the PUCCH;
processing the first set according to a second spacing to obtain a second set; where the second spacing is used to indicate the number of slots between the DCI and the PDSCH;
determining, according to a second set, a reception occasion of the PDSCH that is scheduled by the DCI and corresponds to a static HARQ codebook of each of the cells.

In FIG. 11, the bus architecture may include any number of interconnected buses and bridges, specifically one or more processors represented by processor 1100 and various circuits of memory represented by memory 1120 are linked together. The bus architecture may also link together various other circuits such as peripherals, voltage regulators, and power management circuits, which are well known in the art and are therefore not further described herein. The bus interface provides an interface. The transceiver 1110 may be a plurality of components, namely, a transmitter and a receiver, providing a unit for communicating with various other devices on a transmission medium, which includes a wireless channel, a wired channel, an optical cable, and other transmission media. The processor 1100 is responsible for managing the bus architecture and general processing, and the memory 1120 may store data used by the processor 1100 when performing operations.

The processor 1100 may be a central processing unit (CPU), an application specific integrated circuit (ASIC), a field programmable gate array (FPGA) or a complex programmable logic device (CPLD). The processor may also adopt a multicore architecture.

It should be noted here that the above-mentioned device provided in the embodiment of the present application can implement all the method steps implemented in the method embodiment of FIG. 1 above, and can achieve the same technical effects. The parts and beneficial effects of this embodiment that are the same as those of the method embodiment will not be described in detail here.

In an embodiment of the present application, it also provides a HARQ feedback device, including: a memory, a transceiver, and a processor;

the memory is configured for storing program instructions; the transceiver is configured for sending and receiving data under the control of the processor; and the processor is configured for reading the program instructions in the memory;
the transceiver is configured to perform the following operations:

receiving downlink control information (DCI), the DCI scheduling physical downlink shared channels (PDSCHs) of multiple cells, the DCI indicating the number of slots between the latest PDSCH in the PDSCHs of the scheduled cells and the physical uplink control channel (PUCCH);
the processor is configured to perform the following operations:

determining, according to the second set, a reception occasion of the PDSCH that corresponds to a static HARQ codebook of each cell and scheduled by the DCI;
the second set is obtained according to the first set and the second spacing, the first set includes the first spacing, the first spacing is used to indicate the number of slots between the PDSCH and the PUCCH, and the second spacing is used to indicate the number of slots between the DCI and the PDSCH.

Optionally, the processor 1100 is configured to perform the following operations:

obtaining the second spacing corresponding to each cell in the time domain resource allocation (TDRA) table;
for each first cell of the multiple cells, respectively perform:

determining, according to the obtained second spacing, an adjustment parameter corresponding to each row index of the first cell in the TDRA table;

based on the row indexes of different rows of the first cell in the TDRA table, following spacing processing operations are performed respectively:

determining, according to the adjustment parameter of the $(i+1)^{th}$ row index, an adjusted first set corresponding to the $(i+1)^{th}$ row index, where i is an integer greater than or equal to 1, and i is an integer greater than or equal to 1;

determining a $(i+1)^{th}$ spacing processing result of the $(i+1)^{th}$ row index according to the adjusted first set and the determined $i^{th}$ spacing processing result of the $i^{th}$ row index, and then proceeding to execute the spacing processing operation corresponding to the $(i+2)^{th}$ row index;

after obtaining the spacing processing result corresponding to the last row index of the first cell in the TDRA table, the spacing processing result corresponding to the last row index is determined as the second set of the first cell.

Optionally, the $i^{th}$ spacing processing result of the $i^{th}$ row index is determined in the following manner:

when i=1, determining an adjusted first set corresponding to the first row index according to the adjustment parameter of the first row index corresponding to the first cell;

obtaining, according to the adjusted first set of the first row index, the first spacing processing result of the first row index; or obtaining, according to the first set and the adjusted first set corresponding to the first row index, the first spacing processing result of the first row index.

Optionally, the processor 1100 is configured to perform the following operations:

for one of the row indexes of the first cell in the TDRA table, an adjustment parameter of the row index in the first cell is determined based on a second spacing corresponding to the row index in the first cell and a maximum second spacing corresponding to the row index in the multiple cells.

Optionally, the processor 1100 is configured to perform the following operations:

calculating the adjustment parameter of the first cell corresponding to the row index r $\Delta K_{0,r,c}$ through a formula $\Delta K_{0,r,c} = max(K_{0,r,1}, ..., K_{0,r,n}, ..., K_{0,r,N}) - K_{0,r,c}$;

where $K_{0,r,n}$ represents the second spacing corresponding to the row index r of cell n in the multiple cells, N represents a number of the cells, and $K_{0,r,c}$ represents the second spacing corresponding to the row index r in the first cell c.

Optionally, the processor 1100 is configured to perform the following operations:

for each element in the first set, the respective adjustment parameter of the $(i+1)^{th}$ row index is added to obtain the adjusted first set of the $(i+1)^{th}$ row index.

Optionally, the processor 1100 is configured to perform the following operations:

the adjusted first set and the $i^{th}$ spacing processing result corresponding to the $i^{th}$ row index of the first cell are joined to obtain a union result, which is used as the $(i+1)^{th}$ spacing processing result corresponding to the $(i+1)^{th}$ row index of the first cell.

Optionally, the processor 1100 is configured to perform the following operations:

determining, according to the TDRA table and the second set of the first cell, a valid start and length indicator value (SLIV) corresponding to each first spacing in the second set.

Optionally, the processor 1100 is configured to perform the following operations:

based on the TDRA table and the second set of the first cell, deleting a redundant SLIV in all SLIVs corresponding to the first spacing; or

based on the TDRA table and the second set of the first cell, selecting the SLIV corresponding to the feedback of HARQ-ACK information on the PUCCH indicated by the first spacing as the valid SLIV.

Optionally, the processor 1100 is configured to perform the following operations:

for each cell, execute:

obtaining a second spacing corresponding to a first cell and a number of repeated transmissions of the first cell in the TDRA table;

updating a second spacing corresponding to the first cell according to the number of repeated transmissions.

Optionally, the processor 1100 is configured to perform the following operations:

calculating the updated second spacing $K'_0$ through the formula $K'_0 = K_0 + \text{repetitionNum} - 1$;
where $K_0$ represents the second spacing before updating, and repetitionNum represents the number of repeated transmissions.

Optionally, the processor 1100 is configured to perform the following operations:
in case that HARQ-ACK feedback bundling is configured, the HARQ -ACK information is determined according to the PDSCH with the latest PDSCH reception occasion among the multiple cells.

In another embodiment of the present application, it provides an HARQ feedback device, which includes: a memory, a transceiver, and a processor;

the memory is configured for storing program instructions; the transceiver is configured for sending and receiving data under the control of the processor; and the processor is configured for reading the program instructions in the memory;
the transceiver is configured to perform the following operations:

receiving a DCI, the DCI scheduling PDSCHs of multiple cells, the DCI indicating the number of slots between the latest scheduled PDSCH in the PDSCHs of the scheduled cells and the PUCCH;
the processor is configured to perform the following operations:
determining, according to the second spacing, a reception occasion of the PDSCH that corresponds to the static HARQ codebook of each cell and scheduled by the DCI, where the second spacing is used to indicate the number of slots between the DCI and the PDSCH.

In another embodiment of the present application, it provides an HARQ feedback device, which includes: a memory, a transceiver, and a processor;

the memory is configured for storing program instructions; the transceiver is configured for sending and receiving data under the control of the processor; and the processor is configured for reading the program instructions in the memory;
the transceiver is configured to perform the following operations:

receiving a DCI, the DCI scheduling PDSCHs of multiple cells, the DCI indicating the number of slots between the latest PDSCH in the scheduled PDSCHs of the cells and the PUCCH;
the processor is configured to perform the following operations:
determining, according to the second spacing, a reception occasion of the PDSCH that corresponds to the static HARQ codebook of each cell and scheduled by the DCI, where the second spacing is used to indicate the number of slots between the DCI and the PDSCH.

Optionally, the second spacing is recorded in a TDRA table, and the second spacings corresponding to the multiple cells under each row index of the TDRA table are the same.

Optionally, the second spacing is a specific second spacing recorded in the TDRA table, or a second spacing of a specific cell.

As shown in FIG. 12, the embodiment of the present application further provides a HARQ feedback device, including:

the first receiving module 1210, configured to receive downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the first processing module 1220, configured to determine, according to a second set, a reception occasion of the PDSCH that is scheduled by the DCI and corresponds to a static HARQ codebook of each of the cells;
where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

Optionally, the first processing module is further configured to:

obtain the respective second spacing corresponding to each of the cells in a time domain resource allocation (TDRA) table;
perform the following for each first cell of the cells:

determine, according to the obtained second spacing, an adjustment parameter corresponding to each row index of the first cell in the TDRA table;

perform following spacing processing operations based on each of the row indexes of different rows of the first cell in the TDRA table:

determine, according to an adjustment parameter of an $(i+1)^{th}$ row index, an adjusted first set corresponding to the $(i+1)^{th}$ row index, where i is an integer greater than or equal to 1;

determine an $(i+1)^{th}$ spacing processing result of the $(i+1)^{th}$ row index according to the adjusted first set and a determined $i^{th}$ spacing processing result of the $i^{th}$ row index, and then proceeding to perform a spacing processing operation corresponding to an $(i+2)^{th}$ row index;

after obtaining a spacing processing result corresponding to a last row index of the first cell in the TDRA table, determine the obtained spacing processing result corresponding to the last row index as the second set of the first cell.

Optionally, the first processing module is further configured to:

when i=1, determine an adjusted first set corresponding to a first row index according to an adjustment parameter of the first row index corresponding to the first cell;

obtain a first spacing processing result of the first row index according to the adjusted first set of the first row index, or obtaining a first spacing processing result of the first row index according to the first set and the adjusted first set corresponding to the first row index.

Optionally, the first processing module is further configured to:
for one of the row indexes of the first cell in the TDRA table, determine an adjustment parameter of the row index in the first cell based on a second spacing corresponding to the row index in the first cell and a maximum second spacing corresponding to the row index in the cells.

Optionally, the first processing module is further configured to:

calculate an adjustment parameter $\Delta K_{0,r,c}$ of the first cell corresponding to a row index r through a formula $\Delta K_{0,r,c} = max(K_{0,r,1}, ..., K_{0,r,n}, ..., K_{0,r,N}) - K_{0,r,c}$;

where $K_{0,r,n}$ represents a second spacing corresponding to the row index r of a cell n in the cells, N represents a number of the cells, and $K_{0,r,c}$ represents the second spacing corresponding to the row index r in the first cell c.

Optionally, the first processing module is further configured to:
add, for each element in the first set, the element and the adjustment parameter of the $(i+1)^{th}$ row index, to obtain the adjusted first set of the $(i+1)^{th}$ row index.

Optionally, the first processing module is further configured to:
join the adjusted first set and the $i^{th}$ spacing processing result corresponding to the $i^{th}$ row index of the first cell to obtain a union result, and take the union result as the $(i+1)^{th}$ spacing processing result corresponding to the $(i+1)^{th}$ row index of the first cell.

Optionally, the device further includes:
a valid SLIV determination module, configured to determine, according to the TDRA table and the second set of the first cell, a valid start and length indicator value (SLIV) corresponding to each first spacing in the second set.

Optionally, the valid SLIV determination module is further configured to:

delete, based on the TDRA table and the second set of the first cell, a redundant SLIV in all SLIVs corresponding to the first spacing; or

select as the valid SLIV, based on the TDRA table and the second set of the first cell, a SLIV corresponding to a time when feeding back HARQ-ACK information on the PUCCH indicated by the first spacing.

Optionally, the device further includes a repeated transmission processing module, configured to:

for each of the cells,

obtain a second spacing corresponding to the first cell and a number of repeated transmissions of the first cell in the TDRA table;

update, according to the number of repeated transmissions, the second spacing corresponding to the first cell.

Optionally, the repeated transmission processing module is further configured to:

calculate an updated second spacing $K'_0$ through a formula $K'_0 = K_0 + \text{repetitionNum} - 1$;
where $K_0$ represents the second spacing before updating, and repetitionNum represents the number of repeated transmissions.

Optionally, the device further includes:
an HARQ-ACK information determination module, configured to, in case that HARQ-ACK feedback bundling is configured, determine HARQ-ACK information according to a PDSCH corresponding to a latest reception occasion of the PDSCH among the multiple cells.

It should be noted here that the above-mentioned device provided by the embodiments of the present application can implement all the method steps implemented by the terminal as shown in the method embodiment of FIG. 1, and can achieve the same technical effect. The parts and beneficial effects of the embodiments that are the same as the method embodiments will no longer be described in detail.

As shown in FIG. 13, the embodiment of the present application further provides a HARQ feedback device, including:

the second receiving module 1310, configured to receive downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the third processing module 1320, configured to determine, according to a second spacing, a reception occasion of the PDSCH that is scheduled by the DCI and corresponds to a static HARQ codebook of each of the cells, where the second spacing is used to indicate a number of slots between the DCI and the PDSCH.

Optionally, the second spacing is recorded in a time domain resource allocation (TDRA) table, and the second spacings that correspond to the cells and are under each row index of the TDRA table are same.

Optionally, the second spacing is a specific second spacing recorded in the TDRA table, or a second spacing of a specific cell.

It should be noted here that the above-mentioned device provided by the embodiments of the present application can implement all the method steps implemented by the terminal as shown in the method embodiment of FIG. 8, and can achieve the same technical effect. The parts and beneficial effects of the embodiments that are the same as the method embodiments will no longer be described in detail.

It should be noted that the division of units in the embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the prior art, or the entirety or parts of the technical solution of the present application may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present application. The aforementioned storage media include: U disk, removable hard disk, Read-Only Memory (ROM), Random Access Memory (RAM), magnetic disk or optical disc and other media that can store program code.

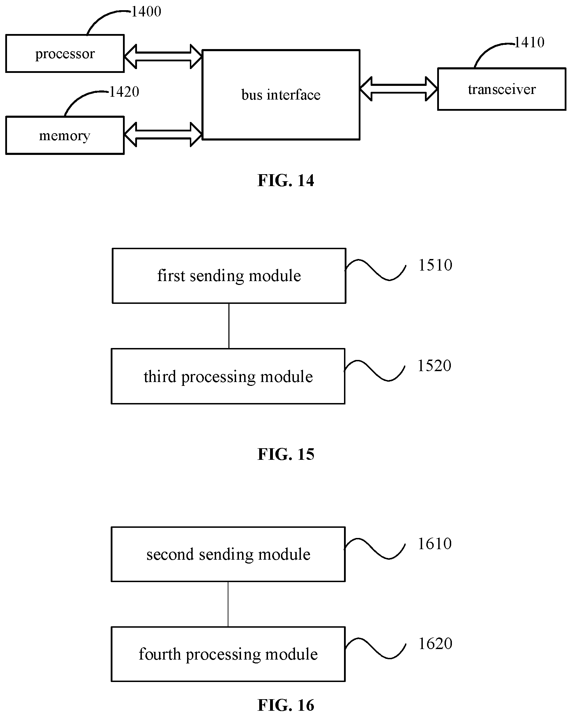

As shown in FIG. 14, the embodiment of the present application further provides a HARQ feedback device, including: a memory 1420, a transceiver 1410, and a processor 1400: the memory 1420 is configured for storing program instructions; the transceiver 1410 is configured for sending and receiving data under the control of the processor 1400; the processor 1400 is configured for reading the program instructions in the memory 1420, and the transceiver 1410 is configured to perform the following operations:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
The processor 1400 is configured to perform the following operations:

determining a first set; where the first set includes a first spacing, and the first spacing is used to indicate the number of slots between the PDSCH and the PUCCH;
processing the first set according to a second spacing to obtain a second set; where the second spacing is used to indicate the number of slots between the DCI and the PDSCH;

determining, according to the second set, a reception occasion of the PDSCH of the terminal, where the PDSCH of the terminal is scheduled by the DCI and corresponds to a static HARQ codebook of each of the cells.

The present application further provides a HARQ feedback device, including: a memory, a transceiver, and a processor;

the memory is configured for storing program instructions; the transceiver is configured for sending and receiving data under the control of the processor; and the processor is configured for reading the program instructions in the memory; the transceiver is configured to perform the following operations:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the processor is configured to perform the following operations:

determining, according to the second set, a reception occasion of the PDSCH of the terminal, where the PDSCH of the terminal is scheduled by the DCI and corresponds to a static HARQ codebook of each of the cells;
where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

Optionally, the processor 1400 is configured to perform the following operations:

obtaining the respective second spacing corresponding to each of the cells in a time domain resource allocation (TDRA) table;
performing the following for each first cell of the cells:

determining, according to the obtained second spacing, an adjustment parameter corresponding to each row index of the first cell in the TDRA table;
performing following spacing processing operations based on each of the row indexes of different rows of the first cell in the TDRA table:

determining, according to an adjustment parameter of an $(i+1)^{th}$ row index, an adjusted first set corresponding to the $(i+1)^{th}$ row index, where i is an integer greater than or equal to 1;
determining an $(i+1)^{th}$ spacing processing result of the $(i+1)^{th}$ row index according to the adjusted first set and a determined $i^{th}$ spacing processing result of the $i^{th}$ row index, and then proceeding to perform a spacing processing operation corresponding to an $(i+2)^{th}$ row index;
after obtaining a spacing processing result corresponding to a last row index of the first cell in the TDRA table, determining the obtained spacing processing result corresponding to the last row index as the second set of the first cell.

Optionally, the determining the $i^{th}$ spacing processing result of the $i^{th}$ row index includes:

when i=1, determining an adjusted first set corresponding to a first row index according to an adjustment parameter of the first row index corresponding to the first cell;
obtaining a first spacing processing result of the first row index according to the adjusted first set of the first row index, or obtaining a first spacing processing result of the first row index according to the first set and the adjusted first set corresponding to the first row index.

Optionally, the processor 1400 is configured to perform the following operations:
for one of the row indexes of the first cell in the TDRA table, determining an adjustment parameter of the row index in the first cell based on a second spacing corresponding to the row index in the first cell and a maximum second spacing corresponding to the row index in the cells.
Optionally, the processor 1400 is configured to perform the following operations:

calculating an adjustment parameter $\Delta K_{0,r,c}$ of the first cell corresponding to a row index r through a formula $\Delta K_{0,r,c} = max(K_{0,r,1}, ..., K_{0,r,n}, ..., K_{0,r,N}) - K_{0,r,c}$;

where $K_{0,r,n}$ represents a second spacing corresponding to the row index r of a cell n in the cells, N represents a number of the cells, and $K_{0,r,c}$ represents the second spacing corresponding to the row index r in the first cell c.

Optionally, the processor 1400 is configured to perform the following operations:
for each element in the first set, the element and the adjustment parameter of the $(i+1)^{th}$ row index are added, to obtain the adjusted first set of the $(i+1)^{th}$ row index.

Optionally, the processor 1400 is configured to perform the following operations:
joining the adjusted first set and the $i^{th}$ spacing processing result corresponding to the $i^{th}$ row index of the first cell to obtain a union result, and taking the union result as the $(i+1)^{th}$ spacing processing result corresponding to the $(i+1)^{th}$ row index of the first cell.

Optionally, the processor 1400 is configured to perform the following operations:
determining, according to the TDRA table and the second set of the first cell, a valid start and length indicator value (SLIV) corresponding to each first spacing in the second set.

Optionally, the processor 1400 is configured to perform the following operations:

deleting, based on the TDRA table and the second set of the first cell, a redundant SLIV in all SLIVs corresponding to the first spacing; or
selecting as the valid SLIV, based on the TDRA table and the second set of the first cell, a SLIV corresponding to a time when feeding back HARQ-ACK information on the PUCCH indicated by the first spacing.

Optionally, the processor 1400 is configured to perform the following operations:

for each of the cells,
obtaining a second spacing corresponding to the first cell and a number of repeated transmissions of the first cell in the TDRA table;
updating, according to the number of repeated transmissions, the second spacing corresponding to the first cell.

Optionally, the processor 1400 is configured to perform the following operations:

calculating an updated second spacing $K'_0$ through a formula $K'_0 = K_0 +$ repetitionNum - 1;
where $K_0$ represents the second spacing before updating, and repetitionNum represents the number of repeated transmissions.

Optionally, the processor 1400 is configured to perform the following operations:
in case that HARQ-ACK feedback bundling is configured, determining HARQ-ACK information according to a PDSCH corresponding to a latest reception occasion of the PDSCH among the multiple cells.

In FIG. 14, the bus architecture may include any number of interconnected buses and bridges, and connects various circuits including one or more processors represented by the processor 1400 and the memory represented by the memory 1420. The bus architecture can also link together various other circuits such as peripherals, voltage regulators, and power management circuits, which are all well known in the art and therefore will not be described further herein. The bus interface provides the interface. The transceiver 1410 may be a plurality of elements, including a transmitter and a receiver, to allow for communication with various other devices on the transmission medium. The transmission medium includes wireless channels, wired channels, optical cables, and other transmission media. The processor 1400 is responsible for managing the bus architecture and general processing, and the memory 1420 can store data used by the processor 1400 when performing operations.

The processor 1400 may be a Central Processing Unit (CPU), an Application Specific Integrated Circuit (ASIC), a Field Programmable Gate Array (FPGA) or Complex Programmable Logic Device (CPLD). The processor can also adopt a multicore architecture.

By calling the computer program stored in the memory, the processor 1400 is configured to perform any of the methods provided by the embodiments of the present application according to the obtained executable instructions. The processor 1400 and the memory 1420 can also be physically separated.

It should be noted here that the above-mentioned device provided by the embodiments of the present application can implement all the method steps implemented by the above-mentioned method embodiment of FIG. 10, and can achieve the same technical effect. The parts and beneficial effects of the embodiments that are the same as the method embodiments will no longer be described in detail.

The present application further provides a HARQ feedback device, including: a memory, a transceiver, and a processor;

the memory is configured for storing program instructions; the transceiver is configured for sending and receiving data under the control of the processor; and the processor is configured for reading the program instructions in the memory;
the transceiver is configured to perform the following operations:

sending DCI, the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the processor is configured to perform the following operations:
determining, according to the second spacing, a reception occasion of the PDSCH of the terminal, where the PDSCH of the terminal is scheduled by the DCI and corresponds to a static HARQ codebook of each of the cells; the second spacing is used to indicate a number of slots between the DCI and the PDSCH.

The present application further provides a HARQ feedback device, including: a memory, a transceiver, and a processor;

the memory is configured for storing program instructions; the transceiver is configured for sending and receiving data under the control of the processor; and the processor is configured for reading the program instructions in the memory; the transceiver is configured to perform the following operations:

sending DCI, the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the processor is configured to perform the following operations:
determining, according to the second spacing, a reception occasion of the PDSCH of the terminal, where the PDSCH of the terminal is scheduled by the DCI and corresponds to a static HARQ codebook of each of the cells; and the second spacing is used to indicate a number of slots between the DCI and the PDSCH.

Optionally, the second spacing is recorded in a time domain resource allocation (TDRA) table, and the second spacings that correspond to the cells and are under each row index of the TDRA table are same.

Optionally, the second spacing is a specific second spacing recorded in the TDRA table, or a second spacing of a specific cell.

It should be noted here that the above-mentioned device provided by the embodiments of the present application can implement all the method steps implemented by the above-mentioned method embodiment of FIG. 10, and can achieve the same technical effect. The parts and beneficial effects of the embodiments that are the same as the method embodiments will no longer be described in detail.

As shown in FIG. 15, the embodiment of the present application further provides a HARQ feedback device, including:

the first sending module 1510, configured to send downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
a third processing module 1520, configured to determine, according to the second set, a reception occasion of the PDSCH of the terminal, where the PDSCH of the terminal is scheduled by the DCI and corresponds to a static HARQ codebook of each of the cells;
where the second set is obtained according to a first set and a second spacing, the first set includes a first spacing, the first spacing is used to indicate a number of slots between the PDSCH and the PUCCH, and the second spacing is used to indicate a number of slots between the DCI and the PDSCH.

Optionally, the third processing module is further configured to:

obtain the respective second spacing corresponding to each of the cells in a time domain resource allocation (TDRA) table;
perform the following for each first cell of the cells:

determine, according to the obtained second spacing, an adjustment parameter corresponding to each row index of the first cell in the TDRA table;
perform following spacing processing operations based on each of the row indexes of different rows of the first cell in the TDRA table:

determine, according to an adjustment parameter of an $(i+1)^{th}$ row index, an adjusted first set corresponding to the $(i+1)^{th}$ row index, where i is an integer greater than or equal to 1;

determine an $(i+1)^{th}$ spacing processing result of the $(i+1)^{th}$ row index according to the adjusted first set and a determined $i^{th}$ spacing processing result of the $i^{th}$ row index, and then proceeding to perform a spacing processing operation corresponding to an $(i+2)^{th}$ row index;

after obtaining a spacing processing result corresponding to a last row index of the first cell in the TDRA table, determine the obtained spacing processing result corresponding to the last row index as the second set of the first cell.

Optionally, the determining the $i^{th}$ spacing processing result of the $i^{th}$ row index includes:

when i=1, determining an adjusted first set corresponding to a first row index according to an adjustment parameter of the first row index corresponding to the first cell;

obtaining a first spacing processing result of the first row index according to the adjusted first set of the first row index, or obtaining a first spacing processing result of the first row index according to the first set and the adjusted first set corresponding to the first row index.

Optionally, the third processing module is further configured to:

for one of the row indexes of the first cell in the TDRA table, determine an adjustment parameter of the row index in the first cell based on a second spacing corresponding to the row index in the first cell and a maximum second spacing corresponding to the row index in the cells.

Optionally, the third processing module is further configured to:

calculate an adjustment parameter $\Delta K_{0,r,c}$ of the first cell corresponding to a row index r through a formula $\Delta K_{0,r,c} = max(K_{0,r,1}, ..., K_{0,r,n}, ..., K_{0,r,N}) - K_{0,r,c}$;

where $K_{0,r,n}$ represents a second spacing corresponding to the row index r of a cell n in the cells, N represents a number of the cells, and $K_{0,r,c}$ represents the second spacing corresponding to the row index r in the first cell c.

Optionally, the third processing module is further configured to:

add, for each element in the first set, the element and the adjustment parameter of the $(i+1)^{th}$ row index, to obtain the adjusted first set of the $(i+1)^{th}$ row index.

Optionally, the third processing module is further configured to:

join the adjusted first set and the $i^{th}$ spacing processing result corresponding to the $i^{th}$ row index of the first cell to obtain a union result, and take the union result as the $(i+1)^{th}$ spacing processing result corresponding to the $(i+1)^{th}$ row index of the first cell.

Optionally, the device further includes a valid SLIV determination module, configured to:

determine, according to the TDRA table and the second set of the first cell, a valid start and length indicator value (SLIV) corresponding to each first spacing in the second set.

Optionally, the valid SLIV determination module is further configured to:

delete, based on the TDRA table and the second set of the first cell, a redundant SLIV in all SLIVs corresponding to the first spacing; or

select as the valid SLIV, based on the TDRA table and the second set of the first cell, a SLIV corresponding to a time when feeding back HARQ-ACK information on the PUCCH indicated by the first spacing.

Optionally, the device further includes a repeated transmission processing module, configured to:

for each of the cells,

obtain a second spacing corresponding to the first cell and a number of repeated transmissions of the first cell in the TDRA table;

update, according to the number of repeated transmissions, the second spacing corresponding to the first cell.

Optionally, the repeated transmission processing module is further configured to:

calculate an updated second spacing $K'_0$ through a formula $K'_0 = K_0 + repetitionNum - 1$;

where $K_0$ represents the second spacing before updating, and repetitionNum represents the number of repeated transmissions.

Optionally, the device further includes an HARQ-ACK information determination module, configured to:
in case that HARQ-ACK feedback bundling is configured, determine HARQ-ACK information according to a PDSCH corresponding to a latest reception occasion of the PDSCH among the multiple cells.

It should be noted here that the above-mentioned device provided by the embodiments of the present application can implement all the method steps implemented by the above-mentioned method embodiment of FIG. 9, and can achieve the same technical effect. The parts and beneficial effects of the embodiments that are the same as the method embodiments will no longer be described in detail.

As shown in FIG. 16, the embodiment of the present application further provides a HARQ feedback device, including:

a second sending module 1610, configured to send downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
a fourth processing module 1620, configured to determine, according to a second spacing, a reception occasion of the PDSCH of the terminal, where the PDSCH of the terminal is scheduled by the DCI and corresponds to a static HARQ codebook of each of the cells, and the second spacing is used to indicate a number of slots between the DCI and the PDSCH.

Optionally, the second spacing is recorded in a time domain resource allocation (TDRA) table, and the second spacings that correspond to the cells and are under each row index of the TDRA table are same.

Optionally, the second spacing is a specific second spacing recorded in the TDRA table, or a second spacing of a specific cell.

It should be noted here that the above-mentioned device provided by the embodiments of the present application can implement all the method steps implemented by the above-mentioned method embodiment of FIG. 10, and can achieve the same technical effect. The parts and beneficial effects of the embodiments that are the same as the method embodiments will no longer be described in detail.

It should be noted that the division of units in the embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the prior art, or the entirety or parts of the technical solution of the present application may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present application. The aforementioned storage media include: U disk, removable hard disk, Read-Only Memory (ROM), Random Access Memory (RAM), magnetic disk or optical disc and other media that can store program code.

It should be noted here that the above-mentioned device provided by the embodiments of the present application can implement all the method steps implemented by the above-mentioned method embodiments, and can achieve the same technical effect. The parts and beneficial effects of the embodiments that are the same as the method embodiments will no longer be described in detail.

In some embodiments of the present application, a processor-readable storage medium is further provided, where the processor-readable storage medium stores program instructions, the program instructions are configured to cause the processor to execute the HARQ feedback method performed by the above-mentioned terminal or network device.

The program instructions, when executed by the processor, can implement all the implementations in the method embodiments on the terminal side or the network device side mentioned above. To avoid repetition, it will not be elaborated here.

The technical solutions provided by the embodiments of the present application can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and 5G System (5GS), etc.

The terminal device involved in the embodiments of the present application may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, portable, pocket-sized, handheld, computer-built-in or vehicle-mounted mobile devices, which exchange audio and/or data with a radio access network. For example, Personal Communication Service (PCS) phones, cordless phones, Session Initiated Protocol (SIP) phones, Wireless Local Loop (WLL) stations, Personal Digital Assistants (PDAs) and other devices. A wireless terminal device may also be called a system, a subscriber unit, a subscriber station, a mobile station, a mobile, a remote station, an access point, a remote terminal, access terminal, a user terminal, a user agent, or a user device, which is not limited in the embodiments of the present application.

The network device involved in the embodiments of the present application may be a base station, and the base station may include multiple cells that provide services to terminals. Depending on the specific application, a base station can also be called an access point, or it can be a device in the access network that communicates with wireless terminal devices through one or more sectors on the air interface, or it can be named by another name. A network device can be used to exchange received air frames with Internet Protocol (IP) packets and act as a router between the wireless terminal device and the rest of the access network, where the rest of the access network can include the IP communications network. Network devices may also coordinate attribute management of the air interface. For example, the network device involved in the embodiments of the present application may be a network device (Base Transceiver Station, BTS) in Global System for Mobile communications (GSM) or Code Division Multiple Access (CDMA), or it can be a network device (NodeB) in a Wide-band Code Division Multiple Access (WCDMA), or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which are not limited in the embodiments of the present application. In some network structures, network devices may include Centralized Unit (CU) nodes and Distributed Unit (DU) nodes, and the centralized units and distributed units may also be arranged geographically separately.

The network device and the terminal device may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may be two Dimensional-MIMO (2D-MIMO), three Dimensional-MIMO (3D-MIMO), Full Dimensional-MIMO (FD-MIMO) or massive-MIMO, and may be diversity transmission, pre-coded transmission, beam forming transmission, or the like.

Those skilled in the art will appreciate that embodiments of the present application may be provided as methods, systems, or computer program products. Accordingly, the present application may take the form of an entirely hardware embodiment, an entirely software embodiment, or an embodiment that combines software and hardware aspects. Furthermore, the present application may take the form of a computer program product embodied on one or more computer-usable storage media (including, but not limited to, magnetic disk storage, optical storage, and the like) including computer-usable program codes.

The present application has been described with reference to flow diagrams and/or block diagrams of methods, devices (systems), and computer program products according to embodiments of the present application. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the modules identified above. The implementation of other modules is similar. In addition, all or part of these modules can be integrated together or implemented independently. The processing element described here may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processor, DSP), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of this application are adopted not to describe a specific sequence or order but to distinguish similar objects. It should be understood that data used like this may be interchanged under a proper condition for implementation of the embodiments of the application described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment.

Obviously, those skilled in the art can make various changes and modifications to the present application without departing from the spirit and scope of the application. In this way, if these modifications and variations of the present application fall within the scope of the claims of the present application and equivalent thereof, the present application is also intended to include these modifications and variations.

## Claims

1.  A hybrid automatic repeat request (HARQ) feedback method, performed by a terminal, the method comprising:

    receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
    determining, according to a second set, a reception occasion of the PDSCH that is scheduled by the DCI and corresponds to a static HARQ codebook of each of the cells;
    wherein the second set is obtained according to a first set and a second spacing, the first set comprises a first spacing, the first spacing is used to indicate a number of slots between the PDSCH and the PUCCH, and the second spacing is used to indicate a number of slots between the DCI and the PDSCH.

2.  The method according to claim 1, wherein the second set being obtained according to the first set and the second spacing comprises:

    obtaining the respective second spacing corresponding to each of the cells in a time domain resource allocation (TDRA) table;
    performing the following for each first cell of the cells:

    determining, according to the obtained second spacing, an adjustment parameter corresponding to each row index of the first cell in the TDRA table;
    performing following spacing processing operations based on each of the row indexes of different rows of the first cell in the TDRA table:

    determining, according to an adjustment parameter of an $(i+1)^{th}$ row index, an adjusted first set corresponding to the $(i+1)^{th}$ row index, wherein i is an integer greater than or equal to 1;
    determining an $(i+1)^{th}$ spacing processing result of the $(i+1)^{th}$ row index according to the adjusted first set

44

and a determined $i^{th}$ spacing processing result of the $i^{th}$ row index, and then proceeding to perform a spacing processing operation corresponding to an $(i+2)^{th}$ row index;

after obtaining a spacing processing result corresponding to a last row index of the first cell in the TDRA table, determining the obtained spacing processing result corresponding to the last row index as the second set of the first cell.

3. The method according to claim 2, wherein the determining the $i^{th}$ spacing processing result of the $i^{th}$ row index comprises:

when i=1, determining an adjusted first set corresponding to a first row index according to an adjustment parameter of the first row index corresponding to the first cell;

obtaining a first spacing processing result of the first row index according to the adjusted first set of the first row index, or obtaining a first spacing processing result of the first row index according to the first set and the adjusted first set corresponding to the first row index.

4. The method according to claim 2, wherein the determining, according to the obtained second spacing, the adjustment parameter corresponding to each row index of the first cell in the TDRA table comprises:

for one of the row indexes of the first cell in the TDRA table, determining an adjustment parameter of the row index in the first cell based on a second spacing corresponding to the row index in the first cell and a maximum second spacing corresponding to the row index in the cells.

5. The method according to claim 4, wherein the determining the adjustment parameter of the row index in the first cell based on the second spacing corresponding to the row index in the first cell and the maximum second spacing corresponding to the row index in the cells comprises:

calculating an adjustment parameter $\Delta K_{0,r,c}$ of the first cell corresponding to a row index r through a formula $\Delta K_{0,r,c} = max(K_{0,r,1}, ..., K_{0,r,n}, ..., K_{0,r,N}) - K_{0,r,c}$;

wherein $K_{0,r,n}$ represents a second spacing corresponding to the row index r of a cell n in the cells, N represents a number of the cells, and $K_{0,r,c}$ represents the second spacing corresponding to the row index r in the first cell c.

6. The method according to claim 2, wherein the determining the adjusted first set corresponding to the $(i+1)^{th}$ row index according to the adjustment parameter of the $(i+1)^{th}$ row index comprises:

for each element in the first set, the element and the adjustment parameter of the $(i+1)^{th}$ row index are added, to obtain the adjusted first set of the $(i+1)^{th}$ row index.

7. The method according to claim 2, wherein the determining the $(i+1)^{th}$ spacing processing result of the $(i+1)^{th}$ row index according to the adjusted first set and the determined $i^{th}$ spacing processing result of the $i^{th}$ row index comprises:

joining the adjusted first set and the $i^{th}$ spacing processing result corresponding to the $i^{th}$ row index of the first cell to obtain a union result, and taking the union result as the $(i+1)^{th}$ spacing processing result corresponding to the $(i+1)^{th}$ row index of the first cell.

8. The method according to claim 2, further comprising:

determining, according to the TDRA table and the second set of the first cell, a valid start and length indicator value (SLIV) corresponding to each first spacing in the second set.

9. The method according to claim 8, wherein the determining, according to the TDRA table and the second set of the first cell, the valid start and length indicator value (SLIV) corresponding to each first spacing in the second set comprises:

deleting, based on the TDRA table and the second set of the first cell, a redundant SLIV in all SLIVs corresponding to the first spacing; or

selecting as the valid SLIV, based on the TDRA table and the second set of the first cell, a SLIV corresponding to a time when feeding back HARQ-ACK information on the PUCCH indicated by the first spacing.

10. The method according to claim 2, wherein the obtaining the respective second spacing corresponding to each of the cells in the time domain resource allocation (TDRA) table comprises:

for each of the cells,

obtaining a second spacing corresponding to the first cell and a number of repeated transmissions of the first cell in the TDRA table;
updating, according to the number of repeated transmissions, the second spacing corresponding to the first cell.

**11.** The method according to claim 10, wherein the updating, according to the number of repeated transmissions, the second spacing corresponding to the first cell comprises:

calculating an updated second spacing $K'_0$ through a formula $K'_0 = K_0 + \text{repetitionNum} - 1$;
wherein $K_0$ represents the second spacing before updating, and repetitionNum represents the number of repeated transmissions.

**12.** The method according to claim 1, wherein after determining, according to the second set, the reception occasion of the PDSCH that corresponds to the static hybrid automatic repeat request (HARQ) codebook of each of the cells, the method further comprises:
in case that HARQ-ACK feedback bundling is configured, determining HARQ-ACK information according to a PDSCH corresponding to a latest reception occasion of the PDSCH among the multiple cells.

**13.** A hybrid automatic repeat request (HARQ) feedback method, performed by a terminal, the method comprising:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
determining, according to a second set configured by a network device, a reception occasion of the PDSCH that is scheduled by the DCI and corresponds to a static HARQ codebook of each of the cells.

**14.** The method according to claim 13, wherein the second set is directly configured by the network device according to a protocol; or the second set is configured by the network device through high-layer signaling.

**15.** The method according to claim 13, wherein the second set being configured by the network device through the high-layer signaling comprises:
when the cell is not configured with single-cell scheduling signaling or an activated part bandwidth (BWP) of the cell is in a sleep state, the second set configured through the high-layer signaling comprises at least one of the following:

a first K1 value set that is of the cells and configured through the high-layer signaling, wherein the K1 represents the number of slots between the PDSCH and the PUCCH;
a first set that is used for multi-cell scheduling and configured through the high-layer signaling, wherein the first set comprises a first spacing, and the first spacing is used to indicate the number of slots between the PDSCH and the PUCCH;
a second K1 value set, wherein the second K1 value set is determined according to values of subcarrier spacings of a PUCCH used to carry HARQ-ACK information, and the values of the subcarrier spacings are different, and K1 values comprised in the second K1 value set are same or different;
a first set corresponding to a DCI format 1-1 configured by the network device;
a first set corresponding to a DCI format 1-2 configured by the network device; or
a union set obtained by joining a first set corresponding to a DCI format 1-1 configured by the network device and a first set corresponding to a DCI format 1-2 configured by the network device.

**16.** The method according to claim 13, wherein the second set being configured by the network device through the high-layer signaling comprises:
when the cell is configured with single-cell scheduling signaling and the single-cell scheduling signaling is of a fallback format, the second set configured through the high-layer signaling comprises at least one of the following:

a first K1 value set that is of the cells and configured through the high-layer signaling, wherein the K1 represents the number of slots between the PDSCH and the PUCCH;
a second K1 value set, wherein the second K1 value set is determined according to values of subcarrier spacings of a PUCCH used to carry HARQ-ACK information, and the values of the subcarrier spacings are different, and K1 values comprised in the second K1 value set are same or different; or
a set obtained by joining the first K1 value set and the second K1 value set.

**17.** The method according to claim 13, wherein the second set being configured by the network device through the high-layer signaling comprises:
when the cell is configured with single-cell scheduling signaling, the single-cell scheduling signaling is of a DCI format 1-1, and the cell is not configured with scheduling signaling of a DCI format 1-2, the second set configured through the high-layer signaling comprises at least one of the following:

a first K1 value set that is of the cells and configured through the high-layer signaling, wherein the K1 represents the number of slots between the PDSCH and the PUCCH;
a first set corresponding to the DCI format 1-1 configured by the network device; or
a set obtained by joining the first K1 value set and a first set corresponding to the DCI format 1-1 configured by the network device.

18. The method according to claim 13, wherein the second set being configured by the network device through the high-layer signaling comprises:
when the cell is configured with single-cell scheduling signaling, the single-cell scheduling signaling is of a DCI format 1-2, and the cell is not configured with scheduling signaling of a DCI format 1-1, the second set configured through the high-layer signaling comprises at least one of the following:

a first K1 value set that is of the cells and configured through the high-layer signaling, wherein the K1 represents the number of slots between the PDSCH and the PUCCH;
a first set corresponding to the DCI format 1-2 configured by the network device; or
a set obtained by joining the first K1 value set and a first set corresponding to the DCI format 1-2 configured by the network device.

19. The method according to claim 13, wherein the second set being configured by the network device through the high-layer signaling comprises:
when the cell is configured with single-cell scheduling signaling, and the single-cell scheduling signaling is of a DCI format 1-2 and a DCI format 1-1, the second set configured through the high-layer signaling comprises at least one of the following:

a union set obtained by joining a first set corresponding to the DCI format 1-1 configured by the network device and a first set corresponding to the DCI format 1-2 configured by the network device;
a first K1 value set that is of the cells and configured through the high-layer signaling, wherein the K1 represents the number of slots between the PDSCH and the PUCCH; or
a set obtained by joining the union set and the first K1 value set.

20. A hybrid automatic repeat request (HARQ) feedback method, performed by a terminal, the method comprising:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
determining, according to a second spacing, a reception occasion of the PDSCH that is scheduled by the DCI and corresponds to a static HARQ codebook of each of the cells, wherein the second spacing is used to indicate a number of slots between the DCI and the PDSCH.

21. The method according to claim 20, wherein the second spacing is recorded in a time domain resource allocation (TDRA) table, and the second spacings that correspond to the cells and are under each row index of the TDRA table are same.

22. The method according to claim 20, wherein the second spacing is a specific second spacing recorded in the TDRA table, or a second spacing of a specific cell.

23. A hybrid automatic repeat request (HARQ) feedback method, performed by a network device, the method comprising:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
determining, according to the second set, a reception occasion of the PDSCH of the terminal, wherein the PDSCH of the terminal is scheduled by the DCI and corresponds to a static HARQ codebook of each of the cells;

wherein the second set is obtained according to a first set and a second spacing, the first set comprises a first spacing, the first spacing is used to indicate a number of slots between the PDSCH and the PUCCH, and the second spacing is used to indicate a number of slots between the DCI and the PDSCH.

24. The method according to claim 23, wherein the second set being obtained according to the first set and the second spacing comprises:

obtaining the respective second spacing corresponding to each of the cells in a time domain resource allocation (TDRA) table;
for each first cell of the multiple cells,
determining, according to the obtained second spacing, an adjustment parameter corresponding to each row index of the first cell in the TDRA table;
performing following spacing processing operations based on each of the row indexes of different rows of the first cell in the TDRA table:

determining, according to an adjustment parameter of an $(i+1)^{th}$ row index, an adjusted first set corresponding to the $(i+1)^{th}$ row index, wherein i is an integer greater than or equal to 1;
determining an $(i+1)^{th}$ spacing processing result of the $(i+1)^{th}$ row index according to the adjusted first set and a determined $i^{th}$ spacing processing result of the $i^{th}$ row index, and then proceeding to perform a spacing processing operation corresponding to an $(i+2)^{th}$ row index;
after obtaining a spacing processing result corresponding to a last row index of the first cell in the TDRA table, determining the obtained spacing processing result corresponding to the last row index as the second set of the first cell.

25. The method according to claim 24, wherein the determining the $i^{th}$ spacing processing result of the $i^{th}$ row index comprises:

when i=1, determining an adjusted first set corresponding to a first row index according to an adjustment parameter of the first row index corresponding to the first cell;
obtaining a first spacing processing result of the first row index according to the adjusted first set of the first row index, or obtaining a first spacing processing result of the first row index according to the first set and the adjusted first set corresponding to the first row index.

26. The method according to claim 24, wherein the determining, according to the obtained second spacing, the adjustment parameter corresponding to each row index of the first cell in the TDRA table comprises:
for one of the row indexes of the first cell in the TDRA table, determining an adjustment parameter of the row index in the first cell based on a second spacing corresponding to the row index in the first cell and a maximum second spacing corresponding to the row index in the cells.

27. The method according to claim 24, further comprising:
determining, according to the TDRA table and the second set of the first cell, a valid start and length indicator value (SLIV) corresponding to each first spacing in the second set.

28. The method according to claim 27, wherein the determining, according to the TDRA table and the second set of the first cell, the valid start and length indicator value (SLIV) corresponding to each first spacing in the second set comprises:

deleting, based on the TDRA table and the second set of the first cell, a redundant SLIV in all SLIVs corresponding to the first spacing; or
selecting as the valid SLIV, based on the TDRA table and the second set of the first cell, a SLIV corresponding to a time when feeding back HARQ-ACK information on the PUCCH indicated by the first spacing.

29. The method according to claim 24, wherein the obtaining the respective second spacing corresponding to each of the cells in the time domain resource allocation (TDRA) table comprises:

for each of the cells,
obtaining a second spacing corresponding to the first cell and a number of repeated transmissions of the first cell in the TDRA table;
updating, according to the number of repeated transmissions, the second spacing corresponding to the first cell.

30. The method according to claim 23, wherein after determining, according to the second set, the reception occasion of the PDSCH of the terminal, the method further comprises:

in case that HARQ-ACK feedback bundling is configured, determining HARQ-ACK information according to a PDSCH corresponding to a latest reception occasion of the PDSCH among the multiple cells.

31. A hybrid automatic repeat request (HARQ) feedback method, performed by a network device, the method comprising:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
determining, according to a second spacing, a reception occasion of the PDSCH of the terminal, wherein the PDSCH of the terminal is scheduled by the DCI and corresponds to a static HARQ codebook of each of the cells, and the second spacing is used to indicate a number of slots between the DCI and the PDSCH.

32. The method according to claim 31, wherein the second spacing is recorded in a time domain resource allocation (TDRA) table, and the second spacings that correspond to the cells and are under each row index of the TDRA table are same.

33. The method according to claim 31, wherein the second spacing is a specific second spacing recorded in the TDRA table, or a second spacing of a specific cell.

34. A hybrid automatic repeat request (HARQ) feedback device, comprising a memory, a transceiver, and a processor;

the memory is configured for storing program instructions; the transceiver is configured for sending and receiving data under the control of the processor; and the processor is configured for reading the program instructions in the memory;
the transceiver is configured to perform the following operations:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the processor is configured to perform the following operations:

determining, according to a second set, a reception occasion of the PDSCH that is scheduled by the DCI and corresponds to a static HARQ codebook of each of the cells;
wherein the second set is obtained according to a first set and a second spacing, the first set comprises a first spacing, the first spacing is used to indicate a number of slots between the PDSCH and the PUCCH, and the second spacing is used to indicate a number of slots between the DCI and the PDSCH.

35. A hybrid automatic repeat request (HARQ) feedback device, comprising a memory, a transceiver, and a processor;

the memory is configured for storing program instructions; the transceiver is configured for sending and receiving data under the control of the processor; and the processor is configured for reading the program instructions in the memory;
the transceiver is configured to perform the following operations:

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the processor is configured to perform the following operations:
determining, according to a second spacing, a reception occasion of the PDSCH that is scheduled by the DCI and corresponds to a static HARQ codebook of each of the cells, wherein the second spacing is used to indicate a number of slots between the DCI and the PDSCH.

36. A hybrid automatic repeat request (HARQ) feedback device, comprising a memory, a transceiver, and a processor;

the memory is configured for storing program instructions; the transceiver is configured for sending and receiving data under the control of the processor; and the processor is configured for reading the program instructions in the memory;
the transceiver is configured to perform the following operations:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the processor is configured to perform the following operations:

determining, according to the second set, a reception occasion of the PDSCH of the terminal, wherein the PDSCH of the terminal is scheduled by the DCI and corresponds to a static HARQ codebook of each of the cells;
wherein the second set is obtained according to a first set and a second spacing, the first set comprises a first spacing, the first spacing is used to indicate a number of slots between the PDSCH and the PUCCH, and the second spacing is used to indicate a number of slots between the DCI and the PDSCH.

37. A hybrid automatic repeat request (HARQ) feedback device, comprising a memory, a transceiver, and a processor;

the memory is configured for storing program instructions; the transceiver is configured for sending and receiving data under the control of the processor; and the processor is configured for reading the program instructions in the memory;
the transceiver is configured to perform the following operations:

sending downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
the processor is configured to perform the following operations:
determining, according to a second spacing, a reception occasion of the PDSCH of the terminal, wherein the PDSCH of the terminal is scheduled by the DCI and corresponds to a static HARQ codebook of each of the cells, and the second spacing is used to indicate a number of slots between the DCI and the PDSCH.

38. A hybrid automatic repeat request (HARQ) feedback device, comprising:

a first receiving module, configured to receive downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
a first processing module, configured to determine, according to a second set, a reception occasion of the PDSCH that is scheduled by the DCI and corresponds to a static HARQ codebook of each of the cells;
wherein the second set is obtained according to a first set and a second spacing, the first set comprises a first spacing, the first spacing is used to indicate a number of slots between the PDSCH and the PUCCH, and the second spacing is used to indicate a number of slots between the DCI and the PDSCH.

39. A hybrid automatic repeat request (HARQ) feedback device, comprising:

a second receiving module, configured to receive downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
a second processing module, configured to determine, according to a second spacing, a reception occasion of the PDSCH that is scheduled by the DCI and corresponds to a static HARQ codebook of each of the cells, wherein the second spacing is used to indicate a number of slots between the DCI and the PDSCH.

40. A hybrid automatic repeat request (HARQ) feedback device, comprising:

a first sending module, configured to send downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
a third processing module, configured to determine, according to the second set, a reception occasion of the PDSCH of the terminal, wherein the PDSCH of the terminal is scheduled by the DCI and corresponds to a static HARQ codebook of each of the cells;

wherein the second set is obtained according to a first set and a second spacing, the first set comprises a first spacing, the first spacing is used to indicate a number of slots between the PDSCH and the PUCCH, and the second spacing is used to indicate a number of slots between the DCI and the PDSCH.

41. A hybrid automatic repeat request (HARQ) feedback device, comprising:

a second sending module, configured to send downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH);
a fourth processing module, configured to determine, according to a second spacing, a reception occasion of the PDSCH of the terminal, wherein the PDSCH of the terminal is scheduled by the DCI and corresponds to a static HARQ codebook of each of the cells, and the second spacing is used to indicate a number of slots between the DCI and the PDSCH.

42. A processor-readable storage medium storing therein a computer program, wherein the computer program is used to cause the processor to execute the hybrid automatic repeat request (HARQ) feedback method according to any one of claims 1 to 12, or the HARQ feedback method according to any one of claims 13 to 19, or the HARQ feedback method according to any one of claims 20 to 22, or the HARQ feedback method according to any one of claims 23 to 30, or the HARQ feedback method according to any one of claims 31 to 33.

receiving downlink control information (DCI), the DCI being used to schedule physical downlink shared channels (PDSCHs) of multiple cells, the DCI indicating a number of slots between a latest PDSCH in the scheduled PDSCHs of the cells and a physical uplink control channel (PUCCH) ⌒ 101

determining a first set; where the first set includes a first spacing, the first spacing is used to indicate a number of slots between the PDSCH and the PUCCH ⌒ 102

processing the first set according to a second spacing to obtain a second set; wherein the second spacing is used to indicate a number of slots between the DCI and the PDSCH ⌒ 103

determining, according to the second set, a reception occasion of the PDSCH that is scheduled by the DCI and corresponds to a static HARQ codebook of each of the cells ⌒ 104

**FIG. 1**

| 0 | 1 | 2 | 3 | 4 | 5 | 6 | 7 | 8 | 9 | 10 | 11 | 12 | 13 | 14 | 15 | 16 | 17 | 18 |

K1=2

K1=4

K1=6

SLIV of
cell-3 = 7

SLIV of
cell-3 = 3

PUCCH for transmitting
HARQ-ACK

**FIG. 2**

53

**FIG. 3**

HARQ-ACK information is not fed back in the PDSCH reception slot

HARQ-ACK information is not fed back in this PDSCH reception slot

feedback bundled HARQ-ACK information

DCI-1

PD-1

Slot-3

cell-1

PD-2

Slot-4

PUCCH   cell-2

Slot-9

PD-3

cell-3

Slot-7

**FIG. 4**

FIG. 5

$$\Delta K_{0, r, c} = (1+2)*4-(4+1)=7$$

FIG. 6

cell-2 | 0 | 1 | 2 | 3 | 4 | 5 | 6 | 7 | 8 | 9 | 10 | 11

K0=10

μ1=2
SCS=60KHz

$\Delta K_{0,\ r,\ c}=2$

cell-1

K0=0

| 0 | 1 | 2 |

μ2=0
SCS=15KHz

**FIG. 7**

receiving DCI, the DCI being used to PDSCHs of multiple cells, the DCI indicating a number of slots between a latest PDSCH in the scheduled PDSCHs of the cells and a PUCCH — 801

↓

determining, according to a second spacing, a reception occasion of the PDSCH that is scheduled by the DCI and corresponds to a static HARQ codebook of each of the cells; where the second spacing is used to indicate a number of slots between the DCI and the PDSCH — 802

**FIG. 8**

sending DCI, the DCI being used to schedule PDSCHs of multiple cells, the DCI indicating a number of slots between a latest PDSCH in the scheduled PDSCHs of the cells and a PUCCH — 901

↓

determining a first set; where the first set includes a first spacing, the first spacing is used to indicate a number of slots between the PDSCH and the PUCCH — 902

↓

processing the first set according to a second spacing to obtain a second set; where the second spacing is used to indicate a number of slots between the DCI and the PDSCH — 903

↓

determining, according to the second set, a reception occasion of the PDSCH that is scheduled by the DCI and corresponds to a static HARQ codebook of each of the cells — 904

**FIG. 9**

sending DCI, the DCI being used to schedule PDSCHs of multiple cells, the DCI indicating a number of slots between a latest PDSCH in the scheduled PDSCHs of the cells and a PUCCH — 1001

determining, according to the second spacing, a reception occasion of the PDSCH of the terminal, where the PDSCH of the terminal is scheduled by the DCI and corresponds to a static HARQ codebook of each of the cells; the second spacing is used to indicate a number of slots between the DCI and the PDSCH — 1002

**FIG. 10**

**FIG. 11**

**FIG. 12**

**FIG. 13**

1400

| processor |

bus interface

1410

| transceiver |

1420

| memory |

**FIG. 14**

| first sending module | 1510

| third processing module | 1520

**FIG. 15**

| second sending module | 1610

| fourth processing module | 1620

**FIG. 16**

## INTERNATIONAL SEARCH REPORT

| International application No. |
|---|
| **PCT/CN2023/091591** |

### A. CLASSIFICATION OF SUBJECT MATTER

H04L1/18(2023.01)i; H04W72/12(2023.01)i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

3GPP; VEN; CNABS; CNTXT; USTXT; EPTXT; WOTXT; CNKI: 混合自动重传反馈, 下行控制信息, 调度, 多, 小区, 时隙数, 间隔, 集合, 扩展, 接收, 时机, HARQ, DCI, PUCCH, PDSCH, multi+, cell, slot?, interval, set, extend, reception, occasion?

### C. DOCUMENTS CONSIDERED TO BE RELEVANT

| Category* | Citation of document, with indication, where appropriate, of the relevant passages | Relevant to claim No. |
|---|---|---|
| A | CN 113747588 A (DATANG MOBILE COMMUNICATIONS EQUIPMENT CO., LTD.) 03 December 2021 (2021-12-03)<br>entire document | 1-42 |
| A | WO 2021248283 A1 (NEC CORP. et al.) 16 December 2021 (2021-12-16)<br>entire document | 1-42 |
| X | INTERDIGITAL INC. "Discussion on PDSCH/PUSCH Enhancements for Supporting 52.6 GHz to 71 GHz Band"<br>*3GPP TSG RAN WG1 #106-bis-e R1-2109908,* 01 October 2021 (2021-10-01),<br>sections 1-3 | 1-42 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 July 2023** | **10 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091591**

| Patent document cited in search report | | | Publication date (day/month/year) | Patent family member(s) | Publication date (day/month/year) |
|---|---|---|---|---|---|
| CN | 113747588 | A | 03 December 2021 | None | |
| WO | 2021248283 | A1 | 16 December 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210476511
- CN 202211439954